# EUROPEAN PATENT APPLICATION

(11) **EP 4 503 803 A1**
(43) Date of publication of application: **05.02.2025**
(21) Application number: 23787492.0
(22) Date of filing: 23.03.2023
(51) Int. Cl.: H04W 72/04, H04B 17/382, H04B 17/309

(54) **COMMUNICATION METHOD, COMMUNICATION APPARATUS, AND COMMUNICATION SYSTEM**

(30) Priority: 16.04.2022 CN 202210398981
(71) Applicant: Huawei Technologies Co., Ltd., Shenzhen, Guangdong 518129 (CN)
(72) Inventor: WU, Hao, Shenzhen, Guangdong 518129 (CN); PENG, Wenjie, Shenzhen, Guangdong 518129 (CN)
(74) Representative: Gill Jennings & Every LLP
(86) International application number: PCT/CN2023/083512
(87) International publication number: WO 2023/197846

(57) **Abstract**

This application provides a communication method, a communication apparatus, and a communication system. The method includes: A first terminal device sends N first signals to a second terminal device on a first beam, where N is a positive integer greater than or equal to 1; the first terminal device determines, based on M measurement results and threshold information, to select a second beam, where the M measurement results are measurement results corresponding to the first beam, the second beam is a beam in at least one candidate beam, and 1 ≤ M ≤ N; and when determining that the first beam fails, the first terminal device sends a second signal to the second terminal device on the second beam. According to technical solutions provided in this application, sidelink beam failure recovery can be implemented, and communication reliability can be improved.

## Description

This application claims priority to Chinese Patent Application No. 202210398981.4, filed with the China National Intellectual Property Administration on April 16, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In new radio (new radio, NR) communication, when a beam of a single carrier fails, a user equipment (user equipment, UE) may send a random access request to a base station or send a beam failure recovery request (beam failure recovery request, BFRQ) message to a base station in a case of dual connectivity, to notify the base station of a link failure, and report detected new available beam information to the base station. The base station sends a beam failure recovery response (beam failure recovery response, BFRR) message to the UE to indicate new link information to the UE, so that the UE and the base station establish a new link connection, thereby recovering a link.

High-frequency communication may provide a wider system bandwidth. With continuous development of sidelink (sidelink, SL) communication technologies, the high-frequency communication may be a development trend of a future sidelink. However, the high-frequency communication has disadvantages such as susceptibility to interference and a relatively fragile link. In sidelink communication, how to implement sidelink beam failure recovery is an urgent problem to be resolved.

### SUMMARY

Embodiments of this application provide a communication method, a communication apparatus, and a communication system to implement sidelink beam failure recovery and improve communication reliability.

According to a first aspect, this application provides a communication method. The method may be applied to a first terminal device, an apparatus (for example, a chip, a chip system, or a circuit) in a first terminal device, or an apparatus that can be used in combination with a first terminal device. An example in which the method is applied to the first terminal device is used below for description. The method may include: The first terminal device sends N first signals to a second terminal device on a first beam, where N is a positive integer greater than or equal to 1; the first terminal device determines, based on M measurement results and threshold information, to select a second beam, where the M measurement results are measurement results corresponding to the first beam, the second beam is a beam in at least one candidate beam, and 1 ≤ M ≤ N; and when determining that the first beam fails, the first terminal device sends a second signal to the second terminal device on the second beam.

In the solution provided in this application, the first terminal device may communicate with the second terminal device. For example, the first terminal device sends a first signal to the second terminal device on the first beam. The second terminal device may determine, based on the received first signal, a plurality of measurement results corresponding to the first beam, and send the plurality of measurement results to the first terminal device. The first terminal device may determine, based on the plurality of measurement results corresponding to the first beam and the threshold information, whether the second terminal device selects the second beam, and if the second terminal device selects the second beam, may send the second signal to the second terminal device on the at least one candidate beam. After receiving the second signal, the second terminal device may determine a measurement result of each of the at least one candidate beam, select the second beam from the at least one candidate beam, and send information about the second beam to the first terminal device. When detecting that the first beam fails, the first terminal device communicates with the second terminal device by using the second beam to implement beam failure recovery.

The first terminal device may determine the second beam by using the threshold information before the first beam fails, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. The solution in this application can implement sidelink beam failure recovery, and improve communication reliability.

In a possible implementation, the determining that the first beam fails includes: When a type of the M measurement results is a first type, and a quantity of measurement results less than or equal to a first threshold in the M measurement results is greater than or equal to a first threshold value, the first terminal device determines that the first beam fails; or when a type of the M measurement results is a second type, and a quantity of measurement results greater than or equal to a second threshold in the M measurement results is greater than or equal to a first threshold value, the first terminal device determines that the first beam fails.

In the solution provided in this application, the first threshold value may be understood as a maximum quantity of beam failures. When a quantity of beam failures of a beam reaches the first threshold value, it may be determined that the beam fails. One beam failure may be understood as: If a type of a measurement result is the first type, for example, the measurement result is a reference signal received power (Reference Signal Received Power, RSRP), reference signal received quality (Reference Signal Received Quality, RSRQ), or a signal to interference plus noise ratio (Signal to Interference Plus Noise Ratio, SINR), when the measurement result is less than or equal to the first threshold, one beam failure may be determined; or if a type of a measurement result is the second type, for example, the measurement result is a block error rate (Block Error Rate, BLER), when the measurement result is greater than or equal to the second threshold, one beam failure may be determined. When the quantity of beam failures exceeds the first threshold value, the first terminal device determines that the first beam fails. The first terminal device determines that the first beam fails, and therefore, can continue to communicate with the second terminal device on the second beam, thereby implementing beam failure recovery on the sidelink, and improving the communication reliability.

In a possible implementation, that the first terminal device determines, based on M measurement results and threshold information, to select a second beam includes: The first terminal device determines, based on the M measurement results, the threshold information, and the first threshold value, to select the second beam.

In this embodiment of this application, the first terminal device may determine a beam failure by using the first threshold value, and may also determine, by using the first threshold value, to select the second beam. For example, the first terminal device may determine, based on the plurality of measurement results corresponding to the first beam, the threshold information, and the first threshold value, to select the second beam. Using the first threshold value to determine to select the second beam can improve accuracy of determining, by the first terminal device, whether to select the second beam. For example, a measurement result of the first beam may be relatively poor at a time, but may be recovered later. In this case, if it is determined to select the second beam, after the information about the second beam is obtained, the first beam does not fail, and the second beam is not used. Consequently, signaling overheads increase. In the solution in this application, the first threshold value is used to determine to select the second beam. If the second beam is selected only when a quantity of times that the measurement result of the first beam is relatively poor reaches the first threshold value, the accuracy of determining, by the first terminal device, whether to select the second beam can be improved.

In a possible implementation, that the first terminal device determines, based on the M measurement results, the threshold information, and the first threshold value, to select the second beam includes: The first terminal device determines, based on L comparison results and the first threshold value, to select the second beam, where the L comparison results are results obtained by comparing the M measurement results with the threshold information, and 1 < L ≤ M.

In the solution provided in this application, when the quantity of times that the measurement result of the first beam is relatively poor exceeds the first threshold value, the first terminal device may determine to select the second beam. That the measurement result of the first beam is relatively poor may be obtained by comparing the measurement result with the threshold information. For example, when the measurement result of the first beam is greater than or equal to the threshold information, it is determined that the measurement result of the first beam is relatively poor; or when the measurement result of the first beam is less than or equal to the threshold information, it is determined that the measurement result of the first beam is relatively poor. The plurality of measurement results of the first beam are first compared with the threshold information to obtain comparison results, and then the comparison results are compared with the first threshold. Through a plurality of times of determining, the accuracy of determining to select the second beam by the first terminal device can be improved.

In a possible implementation, the first threshold is a threshold corresponding to the first type, and a threshold corresponding to the threshold information is greater than the first threshold; and the second threshold is a threshold corresponding to the second type, and the threshold corresponding to the threshold information is less than the second threshold.

In the solution provided in this application, the first threshold and the second threshold may respectively correspond to different types. For example, the first threshold corresponds to the first type, and the second threshold corresponds to the second type. That the measurement result of the first beam is relatively poor may be obtained by comparing the measurement result with the threshold information. A determining condition varies with a type of the measurement result accordingly. Specifically, if the measurement results are of the first type, for example, the RSRP, the RSRQ, or the SINR, larger measurement results indicate better beam quality. In this case, the threshold corresponding to the threshold information may be greater than the first threshold. Because the first threshold is used to detect a beam failure, when the measurement result of the first beam is less than or equal to the threshold information, it may be determined that the measurement result of the first beam is relatively poor but a beam failure condition has not been met yet. If the measurements results are of the second type, for example, the BLER, smaller measurement results indicate better beam quality. In this case, the threshold corresponding to the threshold information may be less than the second threshold. Because the second threshold is used to detect a beam failure, when the measurement result of the first beam is greater than or equal to the threshold information, it may be determined that the measurement result of the first beam is relatively poor but a beam failure condition has not been met yet. The threshold corresponding to the threshold information is set to be greater than the first threshold or less than the second threshold based on different types of measurement results, so that the second beam can be determined before the first beam fails, to resolve a problem that when detecting that a beam fails, the second terminal device (the receive end) cannot notify the first terminal device (the transmit end) by using the beam and cannot determine a new available beam in one or more candidate beams, and consequently, a sidelink communication failure is caused.

In a possible implementation, that the first terminal device determines, based on L comparison results and the first threshold value, to select the second beam includes: When the type of the M measurement results is the first type, and a quantity of measurement results less than or equal to the threshold information in the M measurement results is greater than or equal to the first threshold value, the first terminal device determines to select the second beam; or when the type of the M measurement results is the second type, and a quantity of measurement results greater than or equal to the threshold information in the M measurement results is greater than or equal to the first threshold value, the first terminal device determines to select the second beam.

In the solution provided in this application, the first terminal device may determine a beam failure by using the first threshold value, and may also determine, by using the first threshold value, to select the second beam. That the measurement result of the first beam is relatively poor may be obtained by comparing the measurement result with the threshold information. A determining condition varies with a type of the measurement result accordingly. Specifically, if the measurement result is of the first type, when the measurement result of the first beam is less than or equal to the threshold information, it may be determined that the measurement result of the first beam is relatively poor; or if the measurement result is of the second type, when the measurement result of the first beam is greater than or equal to the threshold information, it may be determined that the measurement result of the first beam is relatively poor. When the quantity of times that the measurement result of the first beam is relatively poor exceeds the first threshold value, the first terminal device may determine to select the second beam. In the solution in this application, the second beam may be determined before the first beam fails, to resolve a problem that when detecting that a beam fails, the second terminal device (the receive end) cannot notify the first terminal device (the transmit end) by using the beam and cannot determine a new available beam in one or more candidate beams, and consequently, a sidelink communication failure is caused.

In a possible implementation, that the first terminal device determines, based on the M measurement results, the threshold information, and the first threshold value, to select the second beam includes: The first terminal device determines, based on L comparison results and a second threshold value, to select the second beam, where the L comparison results are results obtained by comparing the M measurement results with the threshold information, the second threshold value is less than the first threshold value, and 1 < L < M.

In the solution provided in this application, the first threshold value may be understood as a maximum quantity of beam failures. When a quantity of beam failures of a beam reaches the first threshold value, it may be determined that the beam fails. A second threshold value may be defined, and the second threshold value is less than the first threshold value. The second threshold value may be used to determine to select the second beam. In a possible implementation, the threshold information may be equal to the first threshold or the second threshold. The plurality of measurement results of the first beam are compared with the first threshold or the second threshold to obtain a quantity of beam failures of the first beam. When the quantity of beam failures of the first beam exceeds the second threshold value, the first terminal device may determine to select the second beam. In another possible implementation, the threshold information may be greater than the first threshold or less than the second threshold. The plurality of measurement results of the first beam are compared with the threshold information to obtain the quantity of times that the measurement result of the first beam is relatively poor. When the quantity of times that the measurement result of the first beam is relatively poor exceeds the second threshold value, the first terminal device may determine to select the second beam. In the solution in this application, the second beam is determined to be selected by using the second threshold value. If the second beam is determined to be selected when the quantity of beam failures of the first beam exceeds the second threshold value, the second beam may be determined before the first beam fails, to resolve a problem that when detecting that a beam fails, the second terminal device (the receive end) cannot notify the first terminal device (the transmit end) by using the beam and cannot determine a new available beam in one or more candidate beams, and consequently, a sidelink communication failure is caused.

In a possible implementation, that the first terminal device determines, based on L comparison results and a second threshold value, to select the second beam includes: When the threshold corresponding to the threshold information is equal to a first threshold, and a quantity of measurement results less than or equal to the first threshold in the M measurement results is greater than or equal to the second threshold value, the first terminal device determines to select the second beam; or when the threshold corresponding to the threshold information is equal to a second threshold, and a quantity of measurement results greater than or equal to the second threshold in the M measurement results is greater than or equal to the second threshold value, the first terminal device determines to select the second beam.

In the solution provided in this application, if the type of the measurement result is the first type, the threshold corresponding to the threshold information is equal to the first threshold, and a measurement result less than or equal to the first threshold indicates a beam failure, when a quantity of beam failures exceeds the second threshold value, it is determined to select the second beam. If the type of the measurement result is the second type, the threshold corresponding to the threshold information is equal to the second threshold, and a measurement result greater than or equal to the second threshold indicates a beam failure, when a quantity of beam failures exceeds the second threshold value, it is determined to select the second beam. The second beam may be determined before the first beam fails, to resolve a problem that when detecting that a beam fails, the second terminal device (the receive end) cannot notify the first terminal device (the transmit end) by using the beam and cannot determine a new available beam in one or more candidate beams, and consequently, a sidelink communication failure is caused.

In a possible implementation, the communication method further includes: The first terminal device receives the M measurement results from the second terminal device.

In the solution provided in this application, the first terminal device sends a first signal to the second terminal device on the first beam. The second terminal device may determine, based on the received first signal, a plurality of measurement results corresponding to the first beam, and send the plurality of measurement results to the first terminal device, so that the first terminal device can determine, based on the plurality of measurement results corresponding to the first beam and the threshold information, to select the second beam.

In a possible implementation, the determining to select a second beam includes: The first terminal device sends a third signal to the second terminal device on the at least one candidate beam, where the third signal is used to determine a measurement result of the at least one candidate beam.

In the solution provided in this application, the first terminal device determines to select the second beam, and may send the third signal to the second terminal device on the at least one candidate beam. After receiving the second signal, the second terminal device may determine the measurement result of each of the at least one candidate beam, select the second beam from the at least one candidate beam, and send information about the second beam to the first terminal device. When detecting that the first beam fails, the first terminal device communicates with the second terminal device by using the second beam to implement beam failure recovery.

In a possible implementation, the communication method further includes: The first terminal device receives an index of the second beam from the second terminal device, where the second beam is a beam with an optimal measurement result in the at least one candidate beam.

In the solution provided in this application, the second terminal device determines the measurement result of each of the at least one candidate beam, and may select the beam with the optimal measurement result from the at least one candidate beam as the second beam. The first terminal device sends the information about the second beam. When detecting that the first beam fails, the first terminal device communicates with the second terminal device by using the second beam to implement beam failure recovery. The beam with the optimal measurement result in the at least one candidate beam is determined as the second beam. The first terminal device communicates with the second terminal device by using the second beam, so that the communication reliability can be improved.

In a possible implementation, the first type corresponds to an RSRP, RSRQ, or an SINR; and the second type corresponds to a BLER.

In a possible implementation, the communication method further includes: The first terminal device sends at least one of configuration information of the first signal, configuration information of the second signal, configuration information of the third signal, the first threshold, the second threshold, the first threshold value, the second threshold value, and the threshold information to the second terminal device.

According to a second aspect, this application provides a communication method. The method may be applied to a second terminal device, an apparatus (for example, a chip, a chip system, or a circuit) in a second terminal device, or an apparatus that can be used in combination with a second terminal device. An example in which the method is applied to the second terminal device is used below for description. The method may include: The second terminal device receives N first signals from a first terminal device on a first beam, where N is a positive integer greater than or equal to 1; the second terminal device selects a second beam based on M measurement results and threshold information, where the M measurement results are measurement results corresponding to the first beam, the second beam is a beam in at least one candidate beam, and 1 ≤ M ≤ N; and the second terminal device receives a second signal from the first terminal device on the second beam.

In the solution provided in this application, the second terminal device may communicate with the first terminal device. For example, the first terminal device sends a first signal to the second terminal device on the first beam. The second terminal device may determine, based on the received first signal, a plurality of measurement results corresponding to the first beam, determine, based on the plurality of measurement results corresponding to the first beam and the threshold information, to select the second beam, and send information about the second beam to the first terminal device. When detecting that the first beam fails, the first terminal device communicates with the second terminal device by using the second beam to implement beam failure recovery.

The second terminal device may determine the second beam by using the threshold information before the first beam fails, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. The solution in this application can implement sidelink beam failure recovery, and improve communication reliability.

It should be understood that the second aspect may be performed by the second terminal device, and specific content of the second aspect corresponds to the content of the first aspect. For corresponding features and achieved beneficial effects of the second aspect, refer to the descriptions of the first aspect. To avoid repetition, detailed descriptions are properly omitted herein.

In a possible implementation, the second terminal device determines, based on M measurement results and threshold information, to select a second beam includes: The second terminal device determines, based on the M measurement results, the threshold information, and a first threshold value, to select the second beam.

In a possible implementation, the second terminal device determines, based on the M measurement results, the threshold information, and a first threshold value, to select the second beam includes: The second terminal device determines, based on L comparison results and the first threshold value, to select the second beam, where the L comparison results are results obtained by comparing the M measurement results with the threshold information, and 1 ≤ L ≤ M.

In a possible implementation, a first threshold is a threshold corresponding to a first type, and a threshold corresponding to the threshold information is greater than the first threshold; and a second threshold is a threshold corresponding to a second type, and the threshold corresponding to the threshold information is less than the second threshold.

In a possible implementation, that the second terminal device determines, based on L comparison results and the first threshold value, to select the second beam includes: When a type of the M measurement results is the first type, and a quantity of measurement results less than or equal to the threshold information in the M measurement results is greater than or equal to the first threshold value, the second terminal device determines to select the second beam; or when a type of the M measurement results is the second type, and a quantity of measurement results greater than or equal to the threshold information in the M measurement results is greater than or equal to the first threshold value, the second terminal device determines to select the second beam.

In a possible implementation, that the second terminal device determines, based on the M measurement results, the threshold information, and a first threshold value, to select the second beam includes: The second terminal device determines, based on L comparison results and a second threshold value, to select the second beam, where the L comparison results are results obtained by comparing the M measurement results with the threshold information, the second threshold value is less than the first threshold value, and 1 ≤ L ≤ M.

In a possible implementation, that the first terminal device determines, based on L comparison results and a second threshold value, to select the second beam includes: When the threshold corresponding to the threshold information is equal to a first threshold, and a quantity of measurement results less than or equal to the first threshold in the M measurement results is greater than or equal to the second threshold value, the second terminal device determines to select the second beam; or when the threshold corresponding to the threshold information is equal to a second threshold, and a quantity of measurement results greater than or equal to the second threshold in the M measurement results is greater than or equal to the second threshold value, the second terminal device determines to select the second beam.

In a possible implementation, the selecting a second beam includes: The second terminal device sends request information to the first terminal device, where the request information is used to request the first terminal device to send a third signal on the at least one candidate beam; the second terminal device receives the third signal from the first terminal device on the at least one candidate beam, and determines a measurement result of the at least one candidate beam based on the third signal; and the second terminal device sends an index of the second beam to the first terminal device, where the second beam is a beam with an optimal measurement result in the at least one candidate beam.

In the solution provided in this application, the second terminal device selects the second beam, and may send, to the first terminal device, the request information used to request the first terminal device to send the third signal on the at least one candidate beam, after receiving the third signal sent by the first terminal device on the at least one candidate beam, measure the at least one candidate beam to obtain a measurement result of each candidate beam, and select the beam with the optimal measurement result from the at least one candidate beam as the second beam based on the measurement result of each candidate beam. The first terminal device recovers communication with the second terminal device by using the second beam, so that the communication reliability can be improved.

In a possible implementation, the communication method further includes: When determining that the first beam fails, the second terminal device sends beam failure indication information to the first terminal device, where the beam failure indication information is used to trigger the first terminal device to send the second signal on the second beam.

In the solution provided in this application, the second terminal device determines that the first beam fails, and may send the beam failure indication information to the first terminal device to notify the first terminal device. After receiving the information indicating the failure of the first beam, the first terminal device recovers, by using the second beam, communication with the second terminal device to implement beam failure recovery.

In a possible implementation, the determining that the first beam fails includes: When the type of the M measurement results is the first type, and the quantity of measurement results less than or equal to the first threshold in the M measurement results is greater than or equal to the first threshold value, the second terminal device determines that the first beam fails; or when the type of the M measurement results is the second type, and the quantity of measurement results greater than or equal to the second threshold in the M measurement results is greater than or equal to the first threshold value, the second terminal device determines that the first beam fails.

In a possible implementation, the first type corresponds to an RSRP, RSRQ, or an SINR; and the second type corresponds to a BLER.

In a possible implementation, the communication method further includes: The second terminal device receives at least one of configuration information of the first signal, configuration information of the second signal, configuration information of the third signal, and the threshold information from the first terminal device.

According to a third aspect, this application provides a communication method. The method may be applied to a second terminal device, an apparatus (for example, a chip, a chip system, or a circuit) in a second terminal device, or an apparatus that can be used in combination with a second terminal device. An example in which the method is applied to the second terminal device is used below for description. The method may include: The second terminal device receives N first signals from a first terminal device on a first beam, where N is a positive integer greater than or equal to 1; the second terminal device sends M measurement results to the first terminal device, where 1 ≤ M ≤ N; and the second terminal device receives a second signal from the first terminal device on a second beam, where the second beam is a beam in at least one candidate beam, the second beam is determined based on the M measurement results and threshold information, and the M measurement results are measurement results corresponding to the first beam.

In the solution provided in this application, the second terminal device may communicate with the first terminal device. For example, the first terminal device sends a first signal to the second terminal device on the first beam. The second terminal device may determine, based on the received first signal, a plurality of measurement results corresponding to the first beam, and send the plurality of measurement results to the first terminal device. The first terminal device may determine, based on the plurality of measurement results corresponding to the first beam and the threshold information, whether the second terminal device selects the second beam, and if the second terminal device selects the second beam, may send the second signal to the second terminal device on the at least one candidate beam. After receiving the second signal, the second terminal device may determine a measurement result of each of the at least one candidate beam, select the second beam from the at least one candidate beam, and send information about the second beam to the first terminal device. When detecting that the first beam fails, the first terminal device communicates with the second terminal device by using the second beam to implement beam failure recovery.

The first terminal device may determine the second beam by using the threshold information before the first beam fails, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. The solution in this application can implement sidelink beam failure recovery, and improve communication reliability.

It should be understood that the third aspect may be performed by the second terminal device, and specific content of the third aspect corresponds to the content of the first aspect. For corresponding features and achieved beneficial effects of the third aspect, refer to the descriptions of the first aspect. To avoid repetition, detailed descriptions are properly omitted herein.

In a possible implementation, the communication method further includes: The second terminal device receives a third signal from the first terminal device on the at least one candidate beam, and determines a measurement result of the at least one candidate beam based on the third signal; and the second terminal device sends an index of the second beam to the first terminal device, where the second beam is a beam with an optimal measurement result in the at least one candidate beam.

In a possible implementation, the communication method further includes: The second terminal device receives at least one of configuration information of the first signal, configuration information of the second signal, configuration information of the third signal, a first threshold, a second threshold, a first threshold value, a second threshold value, and the threshold information from the first terminal device.

According to a fourth aspect, this application provides a communication method. The method may be applied to a second terminal device, an apparatus (for example, a chip, a chip system, or a circuit) in a second terminal device, or an apparatus that can be used in combination with a second terminal device. An example in which the method is applied to the second terminal device is used below for description. The method may include: The second terminal device receives N first signals from a first terminal device on a first beam, where N is a positive integer greater than or equal to 1; the second terminal device determines, based on M measurement results, a threshold, and a first threshold value, that the first beam fails, where the M measurement results are measurement results corresponding to the first beam, and 1 ≤ M ≤ N; when determining that the first beam fails, the second terminal device repeatedly sends request information to the first terminal device in a plurality of different directions, where the request information is used to request the first terminal device to send a third signal on at least one candidate beam; the second terminal device receives the third signal from the first terminal device on the at least one candidate beam, and selects a second beam based on a measurement result of the at least one candidate beam; and the second terminal device receives a second signal from the first terminal device on the second beam, where the second beam is a beam in the at least one candidate beam.

In the solution provided in this application, the second terminal device may communicate with the first terminal device. For example, the first terminal device sends a first signal to the second terminal device on the first beam. The second terminal device may determine, based on the received first signal, a plurality of measurement results corresponding to the first beam, determine, based on the plurality of measurement results corresponding to the first beam, the first threshold, and the first threshold value, whether the first beam fails, and if the first beam fails, may repeatedly send, to the first terminal device in a plurality of different directions other than a direction of the first beam, the request information used to request the first terminal device to send the third signal on the at least one candidate beam. After receiving the request information, the first terminal device may send the third signal to the second terminal device on the at least one candidate beam. After receiving the third signal, the second terminal device determines a measurement result of each of the at least one candidate beam, selects the second beam from the at least one candidate beam based on the measurement result of each candidate beam, and sends information about the second beam to the first terminal device. When detecting that the first beam fails, the first terminal device communicates with the second terminal device by using the second beam to implement beam failure recovery.

After the first beam fails, the second terminal device may repeatedly send the request information to the first terminal device in a plurality of different directions other than the direction of the first beam, and determine the second beam to implement beam failure recovery between the first terminal device and the second terminal device. The solution in this application can implement sidelink beam failure recovery, and improve communication reliability.

It should be understood that the fourth aspect may be performed by the second terminal device, and specific content of the fourth aspect corresponds to the content of the first aspect. For corresponding features and achieved beneficial effects of the fourth aspect, refer to the descriptions of the first aspect. To avoid repetition, detailed descriptions are properly omitted herein.

In a possible implementation, that the second terminal device determines, based on M measurement results, a threshold, and a first threshold value, that the first beam fails includes: When a type of the M measurement results is a first type, and a quantity of measurement results less than or equal to the first threshold in the M measurement results is greater than or equal to the first threshold value, the second terminal device determines that the first beam fails, where the first threshold is a threshold corresponding to the first type; or when a type of the M measurement results is a second type, and a quantity of measurement results greater than or equal to a second threshold in the M measurement results is greater than or equal to a first threshold value, the second terminal device determines that the first beam fails, where the second threshold is a threshold corresponding to the second type.

In a possible implementation, the selecting a second beam based on a measurement result of the at least one candidate beam includes: The second terminal device selects a beam with an optimal measurement result in the at least one candidate beam as the second beam.

The communication method further includes: The second terminal device sends an index of the second beam to the first terminal device.

In a possible implementation, the first type corresponds to an RSRP, RSRQ, or an SINR; and the second type corresponds to a BLER.

In a possible implementation, the communication method further includes: The second terminal device receives at least one of configuration information of the first signal, configuration information of the second signal, configuration information of the third signal, the first threshold, the second threshold, and the first threshold value from the first terminal device.

According to a fifth aspect, an embodiment of this application provides a communication apparatus.

For beneficial effects, refer to the descriptions of the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function.

In a possible implementation, the communication apparatus includes:
a sending unit, configured to send N first signals to a second terminal device on a first beam, where N is a positive integer greater than or equal to 1; and
a determining unit, configured to determine, based on M measurement results and threshold information, to select a second beam, where the M measurement results are measurement results corresponding to the first beam, the second beam is a beam in at least one candidate beam, and 1 ≤ M ≤ N.

When it is determined that the first beam fails, the sending unit is further configured to send a second signal to the second terminal device on the second beam.

In a possible implementation, when determining that the first beam fails, the determining unit is specifically configured to:
when a type of the M measurement results is a first type, and a quantity of measurement results less than or equal to a first threshold in the M measurement results is greater than or equal to a first threshold value, determine that the first beam fails; or
when a type of the M measurement results is a second type, and a quantity of measurement results greater than or equal to a second threshold in the M measurement results is greater than or equal to a first threshold value, determine that the first beam fails.

In a possible implementation, when determining, based on the M measurement results and the threshold information, to select the second beam, the determining unit is specifically configured to:
determine, based on the M measurement results, the threshold information, and the first threshold value, to select the second beam.

In a possible implementation, when determining, based on the M measurement results, the threshold information, and the first threshold value, to select the second beam, the determining unit is specifically configured to:
determine, based on L comparison results and the first threshold value, to select the second beam, where the L comparison results are results obtained by comparing the M measurement results with the threshold information, and 1 ≤ L ≤ M.

In a possible implementation, the first threshold is a threshold corresponding to the first type, and a threshold corresponding to the threshold information is greater than the first threshold; and the second threshold is a threshold corresponding to the second type, and the threshold corresponding to the threshold information is less than the second threshold.

In a possible implementation, when determining, based on the L comparison results and the first threshold value, to select the second beam, the determining unit is specifically configured to:
when the type of the M measurement results is the first type, and a quantity of measurement results less than or equal to the threshold information in the M measurement results is greater than or equal to the first threshold value, determine to select the second beam; or
when the type of the M measurement results is the second type, and a quantity of measurement results greater than or equal to the threshold information in the M measurement results is greater than or equal to the first threshold value, determine to select the second beam.

In a possible implementation, when determining, based on the M measurement results, the threshold information, and the first threshold value, to select the second beam, the determining unit is specifically configured to:
determine, based on L comparison results and a second threshold value, to select the second beam, where the L comparison results are results obtained by comparing the M measurement results with the threshold information, the second threshold value is less than the first threshold value, and 1 ≤ L ≤ M.

In a possible implementation, when determining, based on the L comparison results and the second threshold value, to select the second beam, the determining unit is specifically configured to:
when a threshold corresponding to the threshold information is equal to the first threshold, and the quantity of measurement results less than or equal to the first threshold in the M measurement results is greater than or equal to the second threshold value, determine to select the second beam; or
when a threshold corresponding to the threshold information is equal to the second threshold, and the quantity of measurement results greater than or equal to the second threshold in the M measurement results is greater than or equal to the second threshold value, determine to select the second beam.

In a possible implementation, the communication apparatus further includes:
a receiving unit, configured to receive the M measurement results from the second terminal device.

In a possible implementation, when determining to select the second beam, the determining unit is specifically configured to:
send a third signal to the second terminal device on the at least one candidate beam, where the third signal is used to determine a measurement result of the at least one candidate beam.

In a possible implementation, the receiving unit is further configured to:
receive an index of the second beam from the second terminal device, where the second beam is a beam with an optimal measurement result in the at least one candidate beam.

In a possible implementation, the first type corresponds to an RSRP, RSRQ, or an SINR; and the second type corresponds to a BLER.

In a possible implementation, the sending unit is further configured to:
send at least one of configuration information of the first signal, configuration information of the second signal, configuration information of the third signal, the first threshold, the second threshold, the first threshold value, the second threshold value, and the threshold information to the second terminal device.

According to a sixth aspect, an embodiment of this application provides a communication apparatus.

For beneficial effects, refer to the descriptions of the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive N first signals from a first terminal device on a first beam, where N is a positive integer greater than or equal to 1; and
a determining unit, configured to determine, based on M measurement results and threshold information, to select a second beam, where the M measurement results are measurement results corresponding to the first beam, the second beam is a beam in at least one candidate beam, and 1 ≤ M ≤ N.

The receiving unit is further configured to receive a second signal from the first terminal device on the second beam.

In a possible implementation, when determining, based on the M measurement results and the threshold information, to select the second beam, the determining unit is specifically configured to:
determine, based on the M measurement results, the threshold information, and the first threshold value, to select the second beam.

In a possible implementation, when determining, based on the M measurement results, the threshold information, and the first threshold value, to select the second beam, the determining unit is specifically configured to:
determine, based on L comparison results and the first threshold value, to select the second beam, where the L comparison results are results obtained by comparing the M measurement results with the threshold information, and 1 ≤ L ≤ M.

In a possible implementation, the first threshold is a threshold corresponding to the first type, and a threshold corresponding to the threshold information is greater than the first threshold; and the second threshold is a threshold corresponding to the second type, and the threshold corresponding to the threshold information is less than the second threshold.

In a possible implementation, when determining, based on the L comparison results and the first threshold value, to select the second beam, the determining unit is specifically configured to:
when a type of the M measurement results is a first type, and a quantity of measurement results less than or equal to the threshold information in the M measurement results is greater than or equal to the first threshold value, determine to select the second beam; or
when a type of the M measurement results is a second type, and a quantity of measurement results greater than or equal to the threshold information in the M measurement results is greater than or equal to the first threshold value, determine to select the second beam.

In a possible implementation, when determining, based on the M measurement results, the threshold information, and the first threshold value, to select the second beam, the determining unit is specifically configured to:
determine, based on L comparison results and a second threshold value, to select the second beam, where the L comparison results are results obtained by comparing the M measurement results with the threshold information, the second threshold value is less than the first threshold value, and 1 ≤ L ≤ M.

In a possible implementation, when determining, based on the L comparison results and the second threshold value, to select the second beam, the determining unit is specifically configured to:
when a threshold corresponding to the threshold information is equal to the first threshold, and the quantity of measurement results less than or equal to the first threshold in the M measurement results is greater than or equal to the second threshold value, determine to select the second beam; or
when a threshold corresponding to the threshold information is equal to the first threshold, and the quantity of measurement results greater than or equal to the second threshold in the M measurement results is greater than or equal to the second threshold value, determine to select the second beam.

In a possible implementation, when selecting the second beam, the determining unit is specifically configured to:
send request information to the first terminal device, where the request information is used to request the first terminal device to send a third signal on the at least one candidate beam;
receive the third signal from the first terminal device on the at least one candidate beam;
determine a measurement result of the at least one candidate beam based on the third signal; and
send an index of the second beam to the first terminal device, where the second beam is a beam with an optimal measurement result in the at least one candidate beam.

In a possible implementation, the determining unit is further configured to determine that the first beam fails.

The communication apparatus further includes:
a sending unit, configured to: when it is determined that the first beam fails, send beam failure indication information to the first terminal device, where the beam failure indication information is used to trigger the first terminal device to send the second signal on the second beam.

In a possible implementation, when determining that the first beam fails, the determining unit is specifically configured to:
when the type of the M measurement results is the first type, and the quantity of measurement results less than or equal to the first threshold in the M measurement results is greater than or equal to the first threshold value, determine that the first beam fails; or
when the type of the M measurement results is the second type, and the quantity of measurement results greater than or equal to the second threshold in the M measurement results is greater than or equal to the first threshold value, determine that the first beam fails.

In a possible implementation, the first type corresponds to an RSRP, RSRQ, or an SINR; and the second type corresponds to a BLER.

In a possible implementation, the receiving unit is further configured to receive at least one of configuration information of the first signal, configuration information of the second signal, configuration information of the third signal, and the threshold information from the first terminal device.

According to a seventh aspect, an embodiment of this application provides a communication apparatus.

For beneficial effects, refer to the descriptions of the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive N first signals from a first terminal device on a first beam, where N is a positive integer greater than or equal to 1; and
a sending unit, configured to send M measurement results to the first terminal device, where 1 ≤ M ≤ N.

The receiving unit is further configured to receive a second signal from the first terminal device on a second beam, where the second beam is a beam in at least one candidate beam, the second beam is determined based on the M measurement results and threshold information, and the M measurement results are measurement results corresponding to the first beam.

In a possible implementation, the receiving unit is further configured to:
receive a third signal from the first terminal device on the at least one candidate beam.

The communication apparatus further includes:
a determining unit, configured to determine a measurement result of the at least one candidate beam based on the third signal.

The sending unit is further configured to send an index of the second beam to the first terminal device, where the second beam is a beam with an optimal measurement result in the at least one candidate beam.

In a possible implementation, the receiving unit is further configured to receive at least one of configuration information of the first signal, configuration information of the second signal, configuration information of the third signal, a first threshold, a second threshold, a first threshold value, a second threshold value, and the threshold information from the first terminal device.

According to an eighth aspect, an embodiment of this application provides a communication apparatus.

For beneficial effects, refer to the descriptions of the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive N first signals from a first terminal device on a first beam, where N is a positive integer greater than or equal to 1;
a determining unit, configured to determine, based on M measurement results, a threshold, and a first threshold value, that the first beam fails, where the M measurement results are measurement results corresponding to the first beam, and 1 ≤ M ≤ N;
a sending unit, configured to: when it is determined that the first beam fails, repeatedly send, by a second terminal device, request information to a first terminal device in a plurality of different directions, where the request information is used to request the first terminal device to send a third signal on at least one candidate beam, where
the receiving unit is further configured to receive the third signal from the first terminal device on the at least one candidate beam; and
a selection unit, configured to select a second beam based on a measurement result of the at least one candidate beam, where
the receiving unit is further configured to receive a second signal from the first terminal device on the second beam, where the second beam is a beam in the at least one candidate beam.

In a possible implementation, when determining, based on the M measurement results and the first threshold, that the first beam fails, the determining unit is specifically configured to:
when a type of the M measurement results is a first type, and a quantity of measurement results less than or equal to the first threshold in the M measurement results is greater than or equal to the first threshold value, determine that the first beam fails, where the first threshold is a threshold corresponding to the first type; or
when a type of the M measurement results is a second type, and a quantity of measurement results greater than or equal to a second threshold in the M measurement results is greater than or equal to a first threshold value, determine that the first beam fails, where the second threshold is a threshold corresponding to the second type.

In a possible implementation, when selecting the second beam based on the measurement result of the at least one candidate beam, the selection unit is specifically configured to:
select a beam with an optimal measurement result in the at least one candidate beam as the second beam.

The sending unit is further configured to send an index of the second beam to the first terminal device.

In a possible implementation, the first type corresponds to an RSRP, RSRQ, or an SINR; and the second type corresponds to a BLER.

In a possible implementation, the receiving unit is further configured to receive at least one of configuration information of the first signal, configuration information of the second signal, configuration information of the third signal, the first threshold, the second threshold, and the first threshold value from the first terminal device.

According to a ninth aspect, a communication apparatus is provided. The communication apparatus may be a first terminal device or an apparatus (for example, a chip, a chip system, or a circuit) in a first terminal device. The apparatus may include a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to perform the communication method provided in the first aspect or any implementation of the first aspect.

According to a tenth aspect, a communication apparatus is provided. The communication apparatus may be a second terminal device or an apparatus (for example, a chip, a chip system, or a circuit) in a second terminal device. The apparatus may include a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to perform the communication method provided in any one of the second aspect or the implementations of the second aspect, any one of the third aspect or the implementations of the third aspect, or any one of the fourth aspect or the implementations of the fourth aspect.

According to an eleventh aspect, this application provides a communication system. The communication system includes at least one first terminal device and at least one second terminal device. When the at least one first terminal device and the at least one second terminal device run in the communication system, the communication method according to any one of the first aspect, the second aspect, the third aspect, or the fourth aspect is performed.

According to a twelfth aspect, this application provides a computer-readable storage medium. The computer-readable storage medium stores computer instructions. When a computer program or the computer instructions are run, the method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect is performed.

According to a thirteenth aspect, this application provides a computer program product including executable instructions. When the computer program product runs on a user equipment, the method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect is performed.

According to a fourteenth aspect, this application provides a chip system. The chip system includes a processor, and may further include a memory, configured to implement the method according to any one of the first aspect and the possible implementations of the first aspect, any one of the second aspect and the possible implementations of the second aspect, any one of the third aspect and the possible implementations of the third aspect, or any one of the fourth aspect and the possible implementations of the fourth aspect. The chip system may include a chip, or may include a chip and another discrete component.

### BRIEF DESCRIPTION OF DRAWINGS

To describe technical solutions in embodiments of this application more clearly, the following briefly describes the accompanying drawings required for describing embodiments.
FIG. 1 is a diagram of a network architecture according to an embodiment of this application;
FIG. 2 is a diagram of interactions in a communication method according to an embodiment of this application;
FIG. 3 is a diagram of interactions in another communication method according to an embodiment of this application;
FIG. 4 is a diagram of interactions in still another communication method according to an embodiment of this application;
FIG. 5 is a diagram of interactions in still another communication method according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of still another communication apparatus according to an embodiment of this application;
FIG. 9 is a diagram of a structure of still another communication apparatus according to an embodiment of this application;
FIG. 10 is a diagram of a structure of still another communication apparatus according to an embodiment of this application; and
FIG. 11 is a diagram of a structure of a terminal device according to an embodiment of this application.

### DESCRIPTION OF EMBODIMENTS

In descriptions of this application, unless otherwise specified, "/" means "or". For example, A/B may mean A or B. In this application, "and/or" describes only an association relationship between associated objects and represents that three relationships may exist. For example, A and/or B may represent the following three cases: Only A exists, both A and B exist, and only B exists. In addition, "at least one" may mean one or more, and "a plurality of" may mean two or more. Terms such as "first" and "second" do not limit a quantity and an execution sequence, and the terms such as "first" and "second" do not indicate a definite difference.

It should be noted that in this application, the term such as "example" or "for example" represents giving an example, an illustration, or a description. Any embodiment or design scheme described as an "example" or "for example" in this application should not be understood as being more preferred or having more advantages than another embodiment or design scheme. Exactly, use of the word "example", "for example", or the like is intended to present a related concept in a specific manner.

In the descriptions of this application, "indication" may include a direct indication and an indirect indication, or may include an explicit indication and an implicit indication. Information indicated by a piece of information (for example, indication information described below) is referred to as to-be-indicated information. In a specific implementation process, there are a plurality of manners for indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, particular information may further be indicated based on a pre-agreed (for example, protocol specified) arrangement order of all information to reduce indication overheads to some extent.

The following first provides definitions of technical terms that may occur in embodiments of this application. Terms used in implementations of this application are only used to explain specific embodiments of this application, but are not intended to limit this application.

### (1) Sidelink (Sidelink)

In a wireless communication system, data communication may be performed between UEs via a network, or communication between UEs may be directly performed not through a network device. A link between UEs is referred to as a sidelink, and a typical application scenario of sidelink communication is an internet of vehicles (V2X). In the internet of vehicles, each vehicle is one UE, and data transmission may be directly performed between UEs via a sidelink but not via a network. In this way, a communication delay can be effectively reduced.

The sidelink supports unicast, multicast, and broadcast communication. In embodiments of this application, unicast is used as an example for description. Specifically, to perform data communication between two UEs, a unicast connection needs to be established first. The specific unicast connection is as follows:
Step 1: A transmit end UE may send a direct communication request (Direct Communication Request, DCR) message to a receive end UE, where the DCR message carries an application layer identifier (Identifier, ID) of the transmit end UE, an application layer ID of a target UE, a communication service type required to establish a layer 2 link, security information for establishing a link, and the like.
Step 2: The receive end UE feeds back a direct security mode command (Direct Security Mode Command) message to the transmit end UE.
Step 3: The transmit end UE notifies, by using a direct security mode complete (Direct Security Mode Complete) message, the receive end UE that a security link is completed.
Step 4: When determining that a successful security mode has been established between the receive end UE and the transmit end UE, the receive end UE may send a direct communication accept (Direct Communication Accept, DCA) message to the transmit end UE, where the message may include a destination layer ID, quality of service (Quality of Service, QoS) information, an internet protocol (Internet Protocol, IP) address configuration, and the like of the receive end UE.
Step 5: After the unicast connection is established, the two UEs may establish a PC5-radio resource control (Radio Resource Control, RRC) connection between each other, and send data to each other. Specifically, an application layer of the transmit end UE may send, to an access layer, a PC5 link identifier allocated to the unicast connection and information related to a PC5 unicast connection. The information includes layer 2 IDs (a layer 2 ID of the transmit end and a layer 2 ID of the receive end) and a corresponding PC5 QoS parameter. The information may assist the access layer in maintaining the PC5 link identifier and the information related to the PC5 unicast connection.

The UE obtains a sidelink resource (for a transmit terminal (transmit UE, TX UE)) in two modes, namely, a mode 1 and a mode 2. When working in the mode 1, the UE obtains the sidelink resource from a base station. Specifically, the base station may schedule the sidelink resource for the UE by using downlink control information (Downlink Control Information, DCI), or may configure a sidelink configured grant (configured grant) for the UE by using an RRC message. When working in the mode 2, the UE may receive a sidelink resource pool configuration from the base station or obtain a sidelink resource pool configuration from a preconfiguration, and then select a sidelink resource from the sidelink resource pool for sending. Specifically, the selection may be performed randomly, or may be performed based on a result of sensing (sensing) or partial sensing (partial sensing).

### (2) Synchronization signal and physical broadcast channel (Physical Broadcast Channel, PBCH) block (SynchronizaTIon Signal and PBCH block, SSB)

To ensure downlink synchronization and release a system message, the base station periodically sends an SSB signal. To enable the SSB signal to point to a distance as far as possible, the base station sends the SSB signal in a beam manner by using a multi-antenna technology. To cover as many directions as possible, the base station sends SSB signals in different directions at different moments in one periodicity in a time-sharing scanning manner. These SSB signals in different directions are referred to as SSB beams. Generally, these SSB beams have a relatively wide direction and are wide beams.

### (3) Channel state information reference signal (Channel State Information Reference Signal, CSI-RS)

To obtain channel state information from the base station to the UE, the base station may send a CSI-RS to the UE. Then, the UE may feed back a receiving status of the CSI-RS to the base station, so that the base station determines channel quality. Because the base station does not determine a transmission direction to the UE in advance, the base station may send CSI-RSs in different directions by using the multi-antenna technology to search for the UE. These CSI-RSs in different directions are referred to as CSI-RS beams.

### (4) Beam failure detection and beam failure recovery

A CSI-RS is used as an example, and beam failure detection in an NR system includes the following steps:
Step 1: Abase station configures and activates, for a UE by using an RRC message, an SSB/CSI-RS used to detect a beam failure and a candidate beam CSI-RS set used for beam recovery.
Step 2: The base station sends a periodic CSI-RS beam and candidate beam CSI-RS set.
Step 3: The UE evaluates link quality based on the CSI-RS beam set. When the link quality is lower than a threshold, a physical layer of the UE periodically sends a beam failure indication (beam failure indication) to a media access control (Medium Access Control, MAC) layer. Within a time, when a quantity of consecutive beam failure indications received by the MAC layer exceeds a maximum value (beam Failure Instance Max Count), the MAC layer determines that a beam failure occurs. The UE further measures the CSI-RS candidate beam set, and determines whether a candidate beam meeting the threshold exists.
Step 4: When detecting that beam sending fails, the UE triggers a random access procedure request, that is, the UE may send a beam failure recovery message to the base station, where the message may further carry an index of a candidate beam.
Step 5: After receiving the beam failure recovery message, the base station feeds back an uplink grant related to the beam failure recovery message to respond to successful beam recovery.

It should be understood that definitions of the foregoing technical terms are merely examples. For example, with continuous development of technologies, ranges of the foregoing definitions may also change. This is not limited in embodiments of this application.

The following clearly describes embodiments of this application in detail with reference to the accompanying drawings in embodiments of this application.

In NR communication, when a beam of a single carrier fails, a UE may send a random access request to a base station or send a beam failure recovery request message to a base station in a case of dual connectivity to notify the base station of a link failure, and report detected new available beam information to the base station. The base station sends a beam failure recovery response message to the UE to indicate new link information to the UE, so that the UE and the base station establish a new link connection, thereby recovering a link.

High-frequency communication may provide a wider system bandwidth. With continuous development of sidelink communication technologies, the high-frequency communication may be a development trend of a future sidelink. However, the high-frequency communication has disadvantages such as susceptibility to interference and a relatively fragile link. In sidelink communication, because there is no random access mechanism of an NR system for a sidelink, when detecting that a beam of a single carrier fails, a receiving UE cannot notify a sending UE by using the beam, and cannot determine a new available beam in one or more candidate beams, and consequently, a sidelink communication failure is caused. Therefore, how to implement sidelink beam failure recovery is an urgent problem to be resolved.

It may be understood that in the foregoing descriptions, the network device is described by using a base station as an example, and the terminal device is described by using a UE as an example. Types of the network device and the terminal device are not limited in embodiments of this application.

A technical problem to be resolved in embodiments of this application may include how to implement sidelink beam failure recovery to improve communication reliability.

Based on the foregoing descriptions, to better understand a communication method provided in this application, a network architecture to which embodiments of this application are applicable are described by using examples.

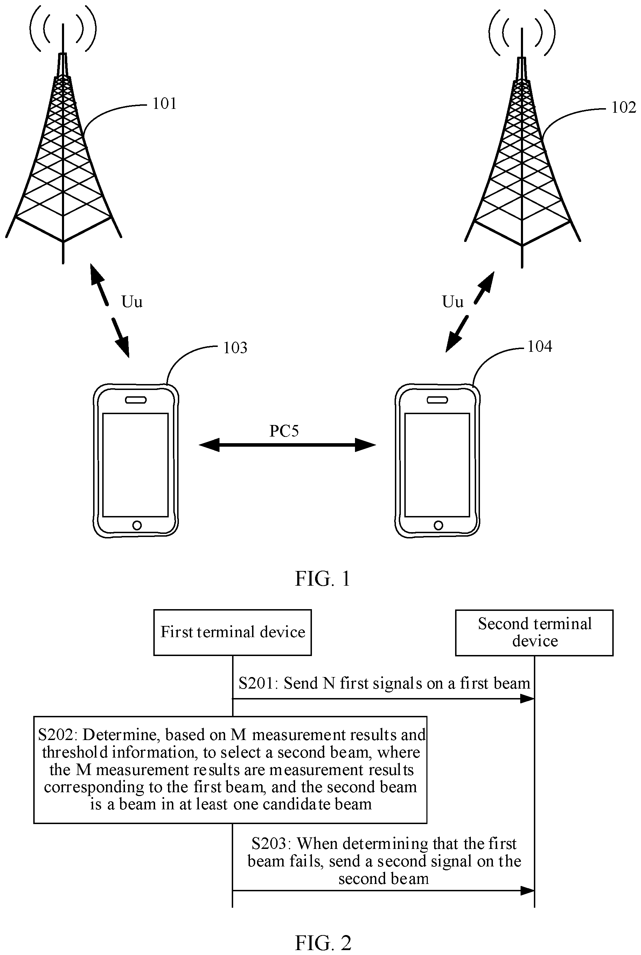

FIG. 1 is a diagram of a network architecture according to an embodiment of this application. As shown in FIG. 1, a technical solution in this embodiment of this application may be applied to a sidelink communication scenario, including a first network device 101, a second network device 102, a first terminal device 103, and a second terminal device 104. A serving network device of the first terminal device 103 may be the first network device 101. The first network device 101 is connected to the first terminal device 103 through a Uu interface. A serving network device of the second terminal device 104 may be the second network device 102. The second network device 102 is connected to the second terminal device 104 through a Uu interface. The first terminal device 103 and the second terminal device 104 may be connected to each other and communicate with each other by using a sidelink. The first terminal device 103 may be a data transmit end for sidelink communication, and the second terminal device 104 may be a data receive end for sidelink communication. For example, the first terminal device 103 sends a reference signal to the second terminal device 104 by using a beam, and the second terminal device 104 may feed back a beam measurement result to the first terminal device 103.

Communication between the first terminal device 103 and the second terminal device 104 may be unicast communication.

It should be noted that this embodiment of this application may be applied to communication between a remote terminal (Remote UE) and a relay terminal (Relay UE) in a terminal-to-network relay (UE-to-Network Relay) scenario, may further be applied to communication between a source terminal (Source UE) and a relay terminal (Relay UE) in a terminal-to-terminal relay (UE-to-UE Relay) scenario, and may further be applied to communication between a relay terminal (Relay UE) and a target terminal (target UE). In this embodiment of this application, an example in which the method is applied to a sidelink communication scenario is used for description, and an application scenario is not limited.

The technical solution in this embodiment of this application may be applied to various communication systems, for example, a global system for mobile communication (global system for mobile communication, GSM) system, a code division multiple access (code division multiple access, CDMA) system, a wideband code multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solution in this embodiment of this application may further be applied to another communication system, for example, a public land mobile network (public land mobile network, PLMN) system, an advanced long term evolution (LTE advanced, LTE-A) system, a 5G system, an NR system, a machine to machine (machine to machine, M2M) system, or another future evolved communication system. This is not limited in this embodiment of this application.

The terminal device in this embodiment of this application is a user-side entity configured to receive or transmit a signal, such as a user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved public land mobile network (public land mobile network, PLMN), or the like. This is not limited in this embodiment of this application.

By way of example, and not limitation, in this embodiment of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also a device with a strong function implemented with the support of software, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in this embodiment of this application may alternatively be a terminal in an internet of things (internet of things, IoT) system. IoT is an important part of future information technology development. A main technical feature of the IoT is to connect an object to a network by using a communication technology, to implement an intelligent network for human-machine interconnection and thing-thing interconnection. In this embodiment of this application, the IoT technology may implement massive connections, deep coverage, and terminal power saving by using, for example, a narrowband (narrowband, NB) technology.

A network device in this embodiment of this application is an entity configured to transmit or receive a signal, or may be a device configured to communicate with a terminal. The network device may be a base station (base transceiver station, BTS) in a global system for mobile communications (global system for mobile communications, GSM) or a code division multiple access (code division multiple access, CDMA) system, may be a base station (NodeB, NB) in a wideband code division multiple access (wideband code division multiple access, WCDMA) system, may be an evolved base station (evolved NodeB, eNB or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in this embodiment of this application.

The network device in this embodiment of this application may be a device in a wireless network, for example, a radio access network (radio access network, RAN) node that connects a terminal to the wireless network. Currently, some example RAN nodes are a base station, a next-generation base station gNB, a transmission reception point (transmission reception point, TRP), an evolved NodeB (evolved NodeB, eNB), a home base station, a baseband unit (baseband unit, BBU), or an access point (access point, AP) in a Wi-Fi system. In a network structure, the network device may include a central unit (central unit, CU) node, a distributed unit (distributed unit, DU) node, or a RAN device including a CU node and a DU node.

In this embodiment of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk drive, a floppy disk, or a magnetic tape), an optical disc (for example, a compact disc (compact disc, CD), a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may represent one or more devices and/or other machine-readable media configured to store information. The term "machine-readable media" may include but is not limited to a radio channel and various other media that can store, contain, and/or carry instructions and/or data.

It should be noted that a quantity and a type of network devices and terminal devices in the network architecture shown in FIG. 1 are merely examples, and embodiments of this application are not limited thereto. For example, more or fewer first terminal devices communicating with the first network device may further be included. For example, more or fewer second terminal devices communicating with the second network device and the first terminal device may further be included. For example, the first network device and the second network device may be a same network device, and the network device may communicate with the first terminal device and the second terminal device. For conciseness of description, this is not described in the figures again. In addition, in the network architecture shown in FIG. 1, although the network device and the terminal device are shown, the application scenario may include but is not limited to the network device and the terminal device, for example, may further include a core network node or a device configured to bear a virtualized network function. This is obvious to persons skilled in the art, and details are not described herein.

With reference to the foregoing network architecture, the following describes a communication method provided in an embodiment of this application. FIG. 2 is a diagram of interactions in a communication method according to an embodiment of this application. A first terminal device in this embodiment may be the first terminal device in the network architecture shown in FIG. 1. A function performed by the first terminal device in this embodiment may also be performed by an apparatus (for example, a chip, a chip system, or a circuit) in the first terminal device. A second terminal device in this embodiment may be the second terminal device in the network architecture shown in FIG. 1. A function performed by the second terminal device in this embodiment may also be performed by an apparatus (for example, a chip, a chip system, or a circuit) in the second terminal device. As shown in FIG. 2, the communication method may include S201 to S203.

S201: The first terminal device sends N first signals to the second terminal device on a first beam.

Correspondingly, the second terminal device receives the N first signals from the first terminal device on the first beam, where N is a positive integer greater than or equal to 1.

In a sidelink communication scenario, the first terminal device may communicate with the second terminal device. For example, the first terminal device sends a first signal to the second terminal device on the first beam. The first terminal device may send the first signal to the second terminal device to detect whether the first beam fails.

Optionally, before communicating with the second terminal device, the first terminal device may first establish a unicast connection.

Serving network devices of the first terminal device and the second terminal device may be a same network device or different network devices. It is assumed that in this embodiment of this application, the serving network device of the first terminal device is a first network device, and the serving network device of the second terminal device is a second network device. In this case, before the first terminal device sends the first signal to the second terminal device, the first network device may send configuration information of the first signal to the first terminal device, for example, send the configuration information of the first signal to the first terminal device by using RRC. Then, the first terminal device sends the configuration information of the first signal to the second terminal device, for example, sends the configuration information of the first signal to the first terminal device by using PC5-RRC.

S202: The first terminal device determines, based on M measurement results and threshold information, to select a second beam, where the M measurement results are measurement results corresponding to the first beam, and the second beam is a beam in at least one candidate beam.

The first terminal device may determine, based on the M measurement results and the threshold information, to select the second beam, where the M measurement results are the measurement results corresponding to the first beam, and the second beam is a beam in the at least one candidate beam. A specific implementation may be as follows:
In an implementation, the first terminal device may determine, based on the M measurement results, the threshold information, and a first threshold value, to select the second beam.

The first threshold value may be understood as a maximum quantity of beam failures. When a quantity of beam failures of a beam reaches the first threshold value, it may be determined that the beam fails. One beam failure may be understood as: If a type of a measurement result is a first type, for example, an RSRP, RSRQ, or an SINR, when the measurement result is less than or equal to the first threshold, one beam failure may be determined; or if a type of a measurement result is a second type, for example, the measurement result is a BLER, when the measurement result is greater than or equal to a second threshold, one beam failure may be determined. When the quantity of beam failures exceeds the first threshold value, the first terminal device determines that the first beam fails.

If a type of the M measurement results is the first type, and the first threshold is a threshold corresponding to the first type, a threshold corresponding to the threshold information may be greater than the first threshold. If a type of the M measurement results is the second type, and the second threshold is a threshold corresponding to the second type, a threshold corresponding to the threshold information may be less than the second threshold. For example, the first type corresponds to the RSRP, the RSRQ, the SINR, or the like; and the second type corresponds to the BLER.

The first terminal device may determine a beam failure by using the first threshold value, and may also determine, by using the first threshold value, to select the second beam. The first terminal device may compare the M measurement results corresponding to the first beam with the threshold information to obtain L comparison results, and then determine, based on the L comparison results and the first threshold value, to select the second beam, where 1 ≤ L ≤ M.

For example, when the type of the M measurement results is the first type, and a quantity (L) of measurement results less than or equal to the threshold information in the M measurement results is greater than or equal to the first threshold value, the first terminal device determines to select the second beam. Because the threshold information is greater than the first threshold, it may be detected, by comparing the threshold information with the M measurement results, that the measurement result of the first beam is relatively poor, but the beam does not necessarily fail. When a quantity of measurement results less than or equal to the threshold information exceeds the first threshold value, the first terminal device may determine to select the second beam. In this way, it can be determined to select the second beam before the first beam fails.

For example, if a physical (physical, PHY) layer of the first terminal device determines that a measurement result is less than or equal to the threshold information, beam failure instance indication (beam Failure Instance indication) information may be sent to a MAC layer once. After receiving the beam failure instance indication information, the MAC layer increases a counter by one time. When a quantity of times of the counter exceeds the first threshold, it may be determined to select the second beam. Optionally, after it is determined to select the second beam, the counter is cleared.

A beam failure instance may be understood as that the PHY layer detects that the measurement result of the first beam is less than or equal to the threshold information.

That the first terminal device determines, based on the L comparison results and the first threshold value, to select the second beam may be understood as follows: Within a time, when a quantity (L) of times of receiving consecutive beam failure instance indication information by the MAC layer exceeds the first threshold value, the MAC layer determines to select the second beam. For example, the first threshold value is a maximum count value of receiving the beam failure instance indication information (beam Failure Instance Max Count). "Consecutive" may be understood as that a time interval at which the MAC layer receives the beam failure instance indication information twice is less than a preset time. Optionally, if the MAC layer has not received the beam failure instance indication information within the preset time, the counter may be cleared.

For another example, when the type of the M measurement results is the second type, and the quantity (L) of measurement results greater than or equal to the threshold information in the M measurement results is greater than or equal to the first threshold value, the first terminal device determines to select the second beam. Because the threshold information is less than the second threshold, it may be detected, by comparing the threshold information with the M measurement results, that the measurement result of the first beam is relatively poor, but the beam does not necessarily fail. When a quantity of measurement results greater than or equal to the threshold information exceeds the first threshold value, the first terminal device may determine to select the second beam. In this way, it can be determined to select the second beam before the first beam fails.

For example, when determining that a measurement result is greater than or equal to the threshold information, the PHY layer of the first terminal device may send beam failure instance indication information to the MAC layer once. After receiving the beam failure instance indication information, the MAC layer increases the counter by one time. When a quantity of times of the counter exceeds the first threshold value, it is determined to select the second beam. Optionally, after it is determined to select the second beam, the counter is cleared.

A beam failure instance may be understood as that the PHY layer detects that the measurement result of the first beam is greater than or equal to the threshold information.

Using the first threshold value to determine to select the second beam can improve accuracy of determining, by the first terminal device, whether to select the second beam. For example, a measurement result of the first beam may be relatively poor at a time, but may be recovered later. In this case, if it is determined to select the second beam, after information about the second beam is obtained, the first beam does not fail, and the second beam is not used. Consequently, signaling overheads increase. In the solution in this application, the first threshold value is used to determine to select the second beam. If the second beam is selected only when a quantity of times that the measurement result of the first beam is relatively poor reaches the first threshold value, the accuracy of determining, by the first terminal device, whether to select the second beam can be improved.

In another implementation, the first terminal device may determine, based on the M measurement results, the threshold information, and the second threshold value, to select the second beam. Details are as follows.

If the type of the M measurement results is the first type, the first threshold is the threshold corresponding to the first type, and the threshold corresponding to the threshold information is equal to the first threshold. If the type of the M measurement results is the second type, the second threshold is the threshold corresponding to the second type, and the threshold corresponding to the threshold information may be equal to the second threshold.

The second threshold value is less than the first threshold value, and the first terminal device may determine a beam failure by using the first threshold value, and determine, by using the second threshold value, to select the second beam. The first terminal device may compare the M measurement results corresponding to the first beam with the first threshold or the second threshold to obtain L comparison results, and then determine, based on the L comparison results and the second threshold value, to select the second beam.

For example, when the type of the M measurement results is the first type, and the quantity (L) of measurement results less than or equal to the first threshold in the M measurement results is greater than or equal to the second threshold value, the first terminal device determines to select the second beam. It can be understood that when the quantity of measurement results less than or equal to the first threshold in the M measurement results is greater than or equal to the first threshold value, it is determined that the first beam fails. Because the second threshold value is less than the first threshold value, by comparing the quantity of measurement results less than or equal to the first threshold with the second threshold value, it may be detected, before the first beam fails, that the first beam may fail due to a relatively poor measurement result of the first beam, and it is determined to select the second beam. Therefore, it can be determined to select the second beam before the first beam fails.

For example, when determining that a measurement result is less than or equal to the first threshold, the PHY layer of the first terminal device may send beam failure instance indication information to the MAC layer once. After receiving the beam failure instance indication information, the MAC layer increases the counter by one time. When a quantity of times of the counter exceeds the second threshold value, it is determined to select the second beam. Optionally, after it is determined to select the second beam, the counter is cleared.

A beam failure instance may be understood as that the PHY layer detects that the measurement result of the first beam is less than or equal to the first threshold.

That the first terminal device determines, based on the L comparison results and the second threshold value, to select the second beam may be understood as follows: Within a time, when a quantity (L) of times of receiving consecutive beam failure instance indication information by the MAC layer exceeds the second threshold value, the MAC layer determines to select the second beam. For example, the second threshold value is a second value of receiving the beam failure instance indication information. "Consecutive" may be understood as that a time interval at which the MAC layer receives the beam failure instance indication information twice is less than a preset time. Optionally, if the MAC layer has not received the beam failure instance indication information within the preset time, the counter may be cleared.

For another example, when the type of the M measurement results is the second type, and the quantity (L) of measurement results greater than or equal to the second threshold in the M measurement results is greater than or equal to the second threshold value, the first terminal device determines to select the second beam. It can be understood that when the quantity of measurement results less than or equal to the second threshold in the M measurement results is greater than or equal to the first threshold value, it is determined that the first beam fails. Because the second threshold value is less than the first threshold value, by comparing the L comparison results with the second threshold value, it may be detected, before the first beam fails, that the first beam may fail due to a relatively poor measurement result of the first beam, and it is determined to select the second beam. Therefore, it can be determined to select the second beam before the first beam fails.

For example, when determining that a measurement result is greater than or equal to the second threshold, the PHY layer of the first terminal device may send beam failure instance indication information to the MAC layer once. After receiving the beam failure instance indication information, the MAC layer increases the counter by one time. When a quantity of times of the counter exceeds the second threshold value, it is determined to select the second beam. Optionally, after it is determined to select the second beam, the counter is cleared.

A beam failure instance may be understood as that the PHY layer detects that the measurement result of the first beam is greater than or equal to the second threshold.

Optionally, the second terminal device may receive the first threshold/the second threshold, and feed back a measurement result of the first beam less than or equal to the first threshold or a measurement result greater than or equal to the second threshold to the first terminal device. The first terminal device compares a quantity of the measurement results with the second threshold value, and determines to select the second beam.

Optionally, the first terminal device detects, by using the first threshold value, that the beam fails, and determines, by using the second threshold value, to select the second beam. The same counter may be used. For example, when a value of the counter is equal to the second threshold value, it is determined to select the second beam; and when the counter continues counting, and the value is equal to the first threshold value, it is detected that a beam fails. Optionally, the first terminal device determines that the first beam fails, and the counter may be cleared. Using the same counter can save a resource.

In still another implementation, the first terminal device may determine, based on the M measurement results, the threshold information, and the second threshold value, to select the second beam. Details are as follows.

If a type of the M measurement results is the first type, and the first threshold is a threshold corresponding to the first type, a threshold corresponding to the threshold information may be greater than the first threshold. If a type of the M measurement results is the second type, and the second threshold is a threshold corresponding to the second type, a threshold corresponding to the threshold information may be less than the second threshold.

The second threshold value is less than the first threshold value, and the first terminal device may determine a beam failure by using the first threshold value, and determine, by using the second threshold value, to select the second beam. The first terminal device may compare the M measurement results corresponding to the first beam with the first threshold or the second threshold to obtain L comparison results, and then determine, based on the L comparison results and the second threshold value, to select the second beam.

For example, when the type of the M measurement results is the first type, and a quantity (L) of measurement results less than or equal to the threshold information in the M measurement results is greater than or equal to the second threshold value, the first terminal device determines to select the second beam. It can be understood that because the threshold information is greater than the first threshold, it may be detected, by comparing the threshold information with the M measurement results, that the measurement result of the first beam is relatively poor, but the beam does not necessarily fail. When a quantity of measurement results less than or equal to the threshold information exceeds the second threshold value, the first terminal device may determine to select the second beam. In this way, it can be determined to select the second beam before the first beam fails. Because the second threshold value is less than the first threshold value, by comparing the quantity of measurement results less than or equal to the threshold information with the second threshold value, it may be detected, before the first beam fails, that the first beam may fail due to a relatively poor measurement result of the first beam, and it is determined to select the second beam. Therefore, it can be determined to select the second beam before the first beam fails. When the threshold information is greater than the first threshold, determining, based on the threshold information and the second threshold value, to select the second beam can improve accuracy of determining to select the second beam.

For example, when determining that a measurement result is less than or equal to the threshold information, the PHY layer of the first terminal device may send beam failure instance indication information to the MAC layer once. After receiving the beam failure instance indication information, the MAC layer increases the counter by one time. When a quantity of times of the counter exceeds the second threshold value, it is determined to select the second beam. Optionally, after it is determined to select the second beam, the counter is cleared.

A beam failure instance may be understood as that the PHY layer detects that the measurement result of the first beam is less than or equal to the threshold information.

That the first terminal device determines, based on the L comparison results and the second threshold value, to select the second beam may be understood as follows: Within a time, when a quantity (L) of times of receiving consecutive beam failure instance indication information by the MAC layer exceeds the second threshold value, the MAC layer determines to select the second beam. For example, the second threshold value is a second value of receiving the beam failure instance indication information. "Consecutive" may be understood as that a time interval at which the MAC layer receives the beam failure instance indication information twice is less than a preset time. Optionally, if the MAC layer has not received the beam failure instance indication information within the preset time, the counter may be cleared.

For another example, when the type of the M measurement results is the second type, and the quantity (L) of measurement results greater than or equal to the threshold information in the M measurement results is greater than or equal to the second threshold value, the first terminal device determines to select the second beam. It can be understood that because the threshold information is less than the second threshold, it may be detected, by comparing the threshold information with the M measurement results, that the measurement result of the first beam is relatively poor, but the beam does not necessarily fail. When a quantity of measurement results greater than or equal to the threshold information exceeds the second threshold value, the first terminal device may determine to select the second beam. In this way, it can be determined to select the second beam before the first beam fails. Because the second threshold value is less than the first threshold value, by comparing the measurement result greater than or equal to the threshold information with the second threshold value, it may be detected, before the first beam fails, that the first beam may fail due to a relatively poor measurement result of the first beam, and it is determined to select the second beam. Therefore, it can be determined to select the second beam before the first beam fails. When the threshold information is less than the second threshold, determining, based on the threshold information and the second threshold value, to select the second beam can improve accuracy of determining to select the second beam.

For example, when determining that a measurement result is greater than or equal to the threshold information, the PHY layer of the first terminal device may send beam failure instance indication information to the MAC layer once. After receiving the beam failure instance indication information, the MAC layer increases the counter by one time. When a quantity of times of the counter exceeds the second threshold value, it is determined to select the second beam. Optionally, after it is determined to select the second beam, the counter is cleared.

A beam failure instance may be understood as that the PHY layer detects that the measurement result of the first beam is greater than or equal to the threshold information.

Optionally, before the first terminal device determines, based on the M measurement results and the threshold information, to select the second beam, the first network device may send the threshold information, the first threshold, the second threshold, and the first threshold value to the first terminal device. Optionally, the first network device may send difference information between the first threshold/the second threshold and the threshold information to the first terminal device. The first terminal device may determine the threshold information based on the difference information and the first threshold/the second threshold. For example, if the difference information is 1, and the first threshold is 10, the first terminal device may determine that the threshold information is 11.

S203: When determining that the first beam fails, the first terminal device sends a second signal to the second terminal device on the second beam.

When determining that the first beam fails, the first terminal device may send the second signal to the second terminal device on the second beam. An implementation of determining that the first beam fails may vary with different measurement result types. Details are as follows.

When the type of the M measurement results is the first type, and the quantity of measurement results less than or equal to the first threshold in the M measurement results is greater than or equal to the first threshold value, the first terminal device determines that the first beam fails.

For example, when determining that a measurement result is less than or equal to the first threshold, the PHY layer of the first terminal device may send beam failure instance indication information to the MAC layer once. After receiving the beam failure instance indication information, the MAC layer increases the counter by one time. When a quantity of times of the counter exceeds the first threshold value, it is determined that the first beam fails. Optionally, after it is determined that the first beam fails, the counter is cleared.

A beam failure instance may be understood as that the PHY layer detects that the measurement result of the first beam is less than or equal to the first threshold.

It may be understood that within a time, when a quantity (L) of times of receiving consecutive beam failure instance indication information by the MAC layer exceeds the first threshold value, the MAC layer determines that the first beam fails. For example, the first threshold value is a maximum quantity of times of receiving the beam failure instance indication information. "Consecutive" may be understood as that a time interval at which the MAC layer receives the beam failure instance indication information twice is less than a preset time. Optionally, if the MAC layer has not received the beam failure instance indication information within the preset time, the counter may be cleared.

When the type of the M measurement results is the second type, and the quantity of measurement results greater than or equal to the second threshold in the M measurement results is greater than or equal to the first threshold value, the first terminal device determines that the first beam fails.

For example, when determining that a measurement result is greater than or equal to the second threshold, the PHY layer of the first terminal device may send beam failure instance indication information to the MAC layer once. After receiving the beam failure instance indication information, the MAC layer increases the counter by one time. When a quantity of times of the counter exceeds the first threshold value, it is determined that the first beam fails. Optionally, after it is determined that the first beam fails, the counter is cleared.

A beam failure instance may be understood as that the PHY layer detects that the measurement result of the first beam is greater than or equal to the second threshold.

It may be understood that within a time, when a quantity (L) of times of receiving consecutive beam failure instance indication information by the MAC layer exceeds the first threshold value, the MAC layer determines that the first beam fails. For example, the first threshold value is a maximum quantity of times of receiving the beam failure instance indication information. "Consecutive" may be understood as that a time interval at which the MAC layer receives the beam failure instance indication information twice is less than a preset time. Optionally, if the MAC layer has not received the beam failure instance indication information within the preset time, the counter may be cleared.

For example, the first signal and the second signal in this embodiment of this application may be channel state information reference signals (Channel State Information Reference Signal, CSI-RS), channel sounding reference signals (Sounding Reference Signal, SRS), SSB signals, or demodulation reference signals (Demodulation Reference Signal, DMRS) of different channels. The different channels may be, for example, physical sidelink control channels (physical sidelink control channel, PSCCH), physical sidelink shared channels (physical sidelink shared channel, PSSCH), or physical sidelink broad channels (physical sidelink broad channel, PSBCH).

Optionally, after receiving the second signal from the first terminal device, the second terminal device sends a feedback message to the first terminal device. The feedback message is used to feed back beam failure recovery completion to the first terminal device.

Optionally, before the first terminal device sends the second signal to the second terminal device on the second beam, the first network device may send configuration information of the second signal to the first terminal device. Then, the first terminal device sends the configuration information of the second signal to the second terminal device.

In this embodiment of this application, the first terminal device determines, before the first beam fails, to select the second beam, and may recover a communication link to the second terminal device by using the second beam when the first beam fails. In this embodiment of this application, beam failure recovery of the sidelink can be implemented, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. In this way, communication reliability can be improved.

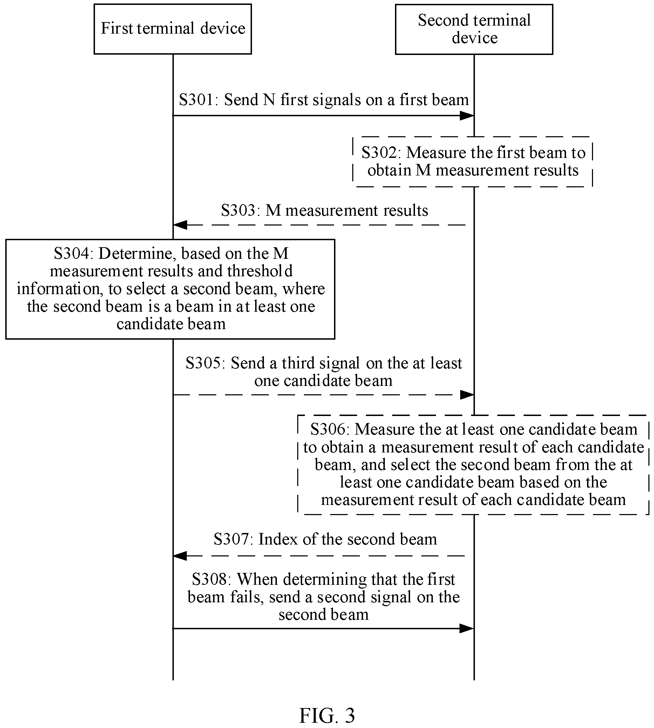

With reference to the foregoing embodiment in FIG. 2, the following describes a communication method provided in an embodiment of this application. FIG. 3 is a diagram of interactions in another communication method according to an embodiment of this application. A first terminal device in this embodiment may be the first terminal device in the network architecture shown in FIG. 1. A function performed by the first terminal device in this embodiment may also be performed by an apparatus (for example, a chip, a chip system, or a circuit) in the first terminal device. A second terminal device in this embodiment may be the second terminal device in the network architecture shown in FIG. 1. A function performed by the second terminal device in this embodiment may also be performed by an apparatus (for example, a chip, a chip system, or a circuit) in the second terminal device. As shown in FIG. 3, the communication method may include S301 to S308. S302, S303, and S305 to S307 are optional steps.

S301: The first terminal device sends N first signals to the second terminal device on a first beam.

It may be understood that for specific descriptions of step S301, refer to step S201. To avoid repetition, details are not described herein again.

S302: The second terminal device measures the first beam to obtain M measurement results.

After receiving the N first signals from the first terminal device on the first beam, the second terminal device may measure the first beam to obtain the M measurement results corresponding to the first beam, where 1 ≤ M ≤ N.

S303: The second terminal device sends the M measurement results to the first terminal device.

Correspondingly, the first terminal device receives the M measurement results from the second terminal device.

Optionally, a resource used by the second terminal device to send the M measurement results to the first terminal device may be indicated by sidelink control information (Sidelink Control Information, SCI) of the first terminal device, or may be indicated by the first terminal device by using a media access control control element (Medium Access Control Control Element, MAC CE). Optionally, each time after the first terminal device sends the first signal on the first beam, the second terminal device may feed back a measurement result of the first beam.

The second terminal device may send the M measurement results to the first terminal device by using a dedicated channel. For example, the dedicated channel may be a symbol (symbol) set to 0 in a physical sidelink feedback channel (Physical Sidelink Feedback Channel, PSFCH) configuration. Optionally, if the first terminal device periodically sends the first signal, the second terminal device may periodically feed back a measurement result of a beam, for example, a measurement report of a signal.

Optionally, the first terminal device may determine the M measurement results based on hybrid automatic repeat request (Hybrid Automatic Repeat Request, HARQ) negative acknowledgment (Nacknowledgement, NACK)/discontinuous transmission (Discontinuous Transmission, DTX) fed back by the second terminal device.

S304: The first terminal device determines, based on the M measurement results and threshold information, to select a second beam, where the second beam is a beam in at least one candidate beam.

The first terminal device receives the M measurement results from the second terminal device, and may determine, based on the M measurement results and the threshold information, to select the second beam. For a specific implementation, refer to the specific description of step S202.

S305: The first terminal device sends a third signal to the second terminal device on the at least one candidate beam.

Correspondingly, the second terminal device receives the third signal from the first terminal device on the at least one candidate beam. If determining to select the second beam, the first terminal device may send the third signal to the second terminal device on the at least one candidate beam. The third signal may be used by the second terminal device to determine a measurement result of the at least one candidate beam. Optionally, before sending the third signal to the second terminal device on the at least one candidate beam, the first terminal device may send a MAC CE to the second terminal device on the first beam. The MAC CE is used by the first terminal device to notify the second terminal device that the first terminal device is to send the third signal to the second terminal device on the at least one candidate beam.

Optionally, if a configuration of the first terminal device is a mode 1, when the first terminal device does not have an available sidelink resource, the first terminal device may send a resource request to a first network device. The first network device performs sidelink authorization to the first terminal device.

Optionally, before the first terminal device sends the third signal to the second terminal device on the at least one candidate beam, the first network device may send configuration information of the third signal to the first terminal device. Then, the first terminal device sends the configuration information of the third signal to the second terminal device.

S306: The second terminal device measures the at least one candidate beam to obtain a measurement result of each candidate beam, and selects the second beam from the at least one candidate beam based on the measurement result of each candidate beam.

After receiving the third signal from the first terminal device on the at least one candidate beam, the second terminal device may measure the at least one candidate beam to obtain the measurement result of each candidate beam, and select the second beam from the at least one candidate beam based on the measurement result of each candidate beam. Specifically, the second beam may be a beam that is in the at least one candidate beam and that meets a first condition. For example, the first condition may be that the measurement result is optimal or the measurement result is second optimal.

S307: The second terminal device sends an index of the second beam to the first terminal device.

Correspondingly, the first terminal device receives the index of the second beam from the second terminal device. After selecting the second beam from the at least one candidate beam, the second terminal device may send the index of the second beam to the first terminal device.

Optionally, the second terminal device sends indication information to the first terminal device. The indication information may include an indication indicating whether the second beam exists, and may further include the index of the second beam when the second beam exists.

Optionally, if the first terminal device has not obtained the second beam meeting a condition, the first terminal device may release a current unicast connection. Alternatively, when the second terminal device determines that the first beam fails, a current unicast connection can also be released. A specific release implementation may include: abandoning a sidelink configuration related to the second terminal device, releasing a data bearer and a signaling bearer of the second terminal device, reconfiguring specific MAC of the second terminal device, releasing a PC5-RRC connection for the second terminal device, indicating the PC5-RRC connection release of the second terminal device to a higher layer, or notifying the first network device of a link release status of the second terminal device by using a sidelink user information (Sidelink User Information, SUI) message. Optionally, if the first terminal device and the second terminal device perform multi-carrier communication, the first terminal device may send, by using an unfailed carrier, a link release message to indicate and perform a release action.

Optionally, if a configuration of the second terminal device is a mode 1, when the second terminal device does not have an available sidelink resource, the second terminal device may send a resource request to a second network device. The second network device performs sidelink authorization to the second terminal device.

S308: When determining that the first beam fails, the first terminal device sends a second signal to the second terminal device on the second beam.

When determining that the first beam fails, the first terminal device may use the second beam based on the index of the second beam, that is, send the second signal to the second terminal device on the second beam. For a specific implementation of determining that the first beam fails, refer to the specific description of step S203.

For example, the first signal, the second signal, and the third signal in this embodiment of this application may be CSI-RSs, SRSs, SSB signals, or DMRSs of different channels. The different channels may be, for example, a PSCCH, a PSSCH, and a PSBCH.

Optionally, after receiving the second signal from the first terminal device, the second terminal device sends a feedback message to the first terminal device. The feedback message is used to feed back beam failure recovery completion to the first terminal device.

Optionally, before the first terminal device sends the second signal to the second terminal device on the second beam, the first network device may send configuration information of the second signal to the first terminal device. Then, the first terminal device sends the configuration information of the second signal to the second terminal device.

In this embodiment of this application, the first terminal device determines, before the first beam fails, to select the second beam, and may recover a communication link to the second terminal device by using the second beam when the first beam fails. In this embodiment of this application, beam failure recovery of the sidelink can be implemented, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. In this way, communication reliability can be improved.

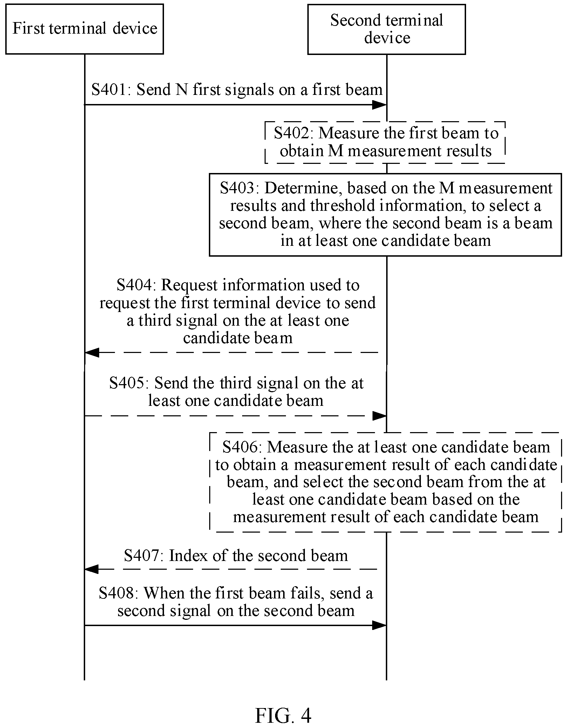

With reference to the foregoing embodiments in FIG. 2 and FIG. 3, the following describes a communication method provided in an embodiment of this application. FIG. 4 is a diagram of interactions in another communication method according to an embodiment of this application. A first terminal device in this embodiment may be the first terminal device in the network architecture shown in FIG. 1. A function performed by the first terminal device in this embodiment may also be performed by an apparatus (for example, a chip, a chip system, or a circuit) in the first terminal device. A second terminal device in this embodiment may be the second terminal device in the network architecture shown in FIG. 1. A function performed by the second terminal device in this embodiment may also be performed by an apparatus (for example, a chip, a chip system, or a circuit) in the second terminal device. As shown in FIG. 4, the communication method may include S401 to S408. S402 and S404 to S407 are optional steps.

S401: The first terminal device sends N first signals to the second terminal device on a first beam.

It may be understood that for specific descriptions of step S401, refer to step S201. To avoid repetition, details are not described herein again.

S402: The second terminal device measures the first beam to obtain M measurement results.

It may be understood that for specific descriptions of step S402, refer to step S302. To avoid repetition, details are not described herein again.

S403: The second terminal device determines, based on the M measurement results and threshold information, to select a second beam, where the second beam is a beam in at least one candidate beam.

It may be understood that for a specific description of the specific step S403, refer to the description of determining, by the first terminal device based on the M measurement results and the threshold information, to select the second beam in step S202. A difference lies in different execution bodies. To avoid repetition, details are not described herein again.

S404: The second terminal device sends, to the first terminal device, request information used to request the first terminal device to send a third signal on the at least one candidate beam.

Correspondingly, the first terminal device receives, from the second terminal device, the request information used to request the first terminal device to send the third signal on the at least one candidate beam. If determining to select the second beam, the second terminal device may send the request information to the first terminal device.

S405: The first terminal device sends the third signal to the second terminal device on the at least one candidate beam.

Correspondingly, the second terminal device receives the third signal from the first terminal device on the at least one candidate beam.

After receiving the request information, the first terminal device may send the third signal to the second terminal device on the at least one candidate beam. Optionally, before the first terminal device sends the third signal to the second terminal device on the at least one candidate beam, the first network device may send configuration information of the third signal to the first terminal device. Then, the first terminal device sends the configuration information of the third signal to the second terminal device.

S406: The second terminal device measures the at least one candidate beam to obtain a measurement result of each candidate beam, and selects the second beam from the at least one candidate beam based on the measurement result of each candidate beam.

It may be understood that for specific descriptions of step S406, refer to step S306. To avoid repetition, details are not described herein again.

S407: The second terminal device sends an index of the second beam to the first terminal device.

It may be understood that for specific descriptions of step S407, refer to step S307. To avoid repetition, details are not described herein again.

S408: When determining that the first beam fails, the first terminal device sends a second signal to the second terminal device on the second beam.

It may be understood that for specific descriptions of step S408, refer to step S308. To avoid repetition, details are not described herein again.

In addition, if determining that the first beam fails, the second terminal device may send beam failure indication information to the first terminal device. The beam failure indication information is used to trigger the first terminal device to send the second signal on the second beam.

Optionally, the second terminal device may repeatedly send the beam failure indication information to the first terminal device by using a plurality of beams in different directions. For example, the second terminal device may repeatedly send the beam failure indication information to the first terminal device through HARQ retransmission by using a plurality of beams in different directions. For another example, the second terminal device may repeatedly send the beam failure indication information to the first terminal device by using a packet data convergence protocol (packet data convergence protocol, PDCP) and a plurality of beams in different directions. For still another example, the second terminal device may repeatedly send the beam failure indication information to the first terminal device by using a PC5-signaling (PC5-signal, PC5-S) protocol layer and a plurality of beams in different directions.

In this embodiment of this application, the second terminal device may determine, before the first beam fails, to select the second beam, so that the first terminal device can restore a communication link to the second terminal device by using the second beam when the first beam fails. In this embodiment of this application, beam failure recovery of the sidelink can be implemented, to resolve a problem that when detecting that a beam fails, the second terminal device (a receive end) cannot notify the first terminal device (a transmit end) by using the beam and cannot determine a new available beam in one or more candidate beams, and consequently, a sidelink communication failure is caused. In this way, communication reliability can be improved.

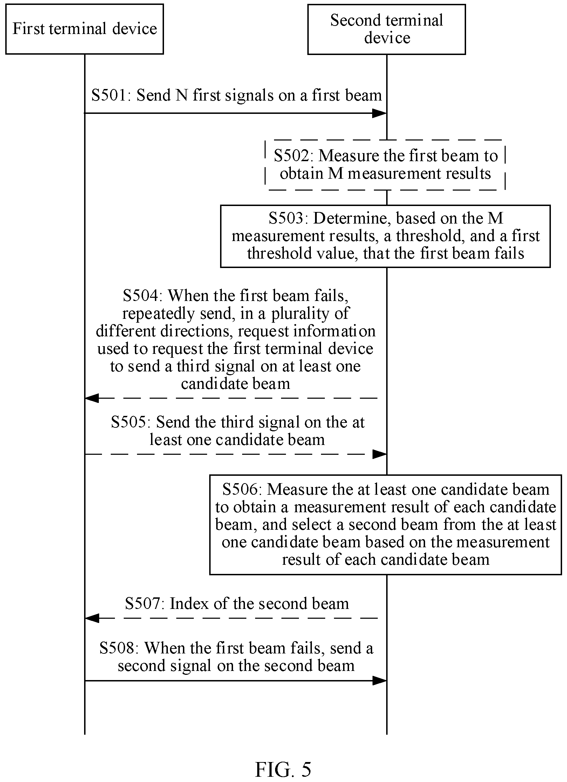

With reference to the foregoing embodiments in FIG. 2 to FIG. 4, the following describes a communication method provided in an embodiment of this application. FIG. 5 is a diagram of interactions in still another communication method according to an embodiment of this application. A first terminal device in this embodiment may be the first terminal device in the network architecture shown in FIG. 1. A function performed by the first terminal device in this embodiment may also be performed by an apparatus (for example, a chip, a chip system, or a circuit) in the first terminal device. A second terminal device in this embodiment may be the second terminal device in the network architecture shown in FIG. 1. A function performed by the second terminal device in this embodiment may also be performed by an apparatus (for example, a chip, a chip system, or a circuit) in the second terminal device. As shown in FIG. 5, the communication method may include S501 to S508. S502, S504, S505, and S507 are optional steps.

S501: The first terminal device sends N first signals to the second terminal device on a first beam.

It may be understood that for specific descriptions of step S501, refer to step S201. To avoid repetition, details are not described herein again.

S502: The second terminal device measures the first beam to obtain M measurement results.

It may be understood that for specific descriptions of step S502, refer to step S302. To avoid repetition, details are not described herein again.

S503: The second terminal device determines, based on the M measurement results, a threshold, and a first threshold value, that the first beam fails.

If a type of the M measurement results is a first type, a first threshold is a threshold corresponding to the first type; or if a type of the M measurement results is a second type, a second threshold is a threshold corresponding to the second type. For example, the first type corresponds to an RSRP, RSRQ, an SINR, or the like; and the second type corresponds to a BLER. It may be understood that the threshold information may be a specific value, or may be a value range. This is not limited in this embodiment of this application.

The first threshold value may be understood as a maximum quantity of beam failures. When a quantity of beam failures of a beam reaches the first threshold value, it may be determined that the beam fails. One beam failure may be understood as: If a type of a measurement result is the first type, for example, the RSRP, the RSRQ, or the SINR, when the measurement result is less than or equal to the first threshold, one beam failure may be determined; or if a type of a measurement result is the second type, for example, the measurement result is the BLER, when the measurement result is greater than or equal to the second threshold, one beam failure may be determined. When the quantity of beam failures exceeds the first threshold value, the second terminal device determines that the first beam fails.

S504: When the first beam fails, the second terminal device repeatedly sends, to the first terminal device in a plurality of different directions, request information used to request the first terminal device to send a third signal on at least one candidate beam.

Correspondingly, the first terminal device receives, from the second terminal device, the request information used to request the first terminal device to send the third signal on the at least one candidate beam.

When determining that the first beam fails, the second terminal device may repeatedly send the request information to the first terminal device in the plurality of different directions, for example, repeatedly send the request information to the first terminal device by using a plurality of beams in different directions. A specific implementation may include: The second terminal device repeatedly sends the request information to the first terminal device through HARQ retransmission by using a plurality of beams in different directions; the second terminal device repeatedly sends the request information to the first terminal device by using a PDCP and a plurality of beams in different directions; or the second terminal device repeatedly sends the request information to the first terminal device by using a PC5-S protocol layer and a plurality of beams in different directions.

S505: The first terminal device sends the third signal to the second terminal device on the at least one candidate beam.

It may be understood that for specific descriptions of step S505, refer to step S405. To avoid repetition, details are not described herein again.

S506: The second terminal device measures the at least one candidate beam to obtain a measurement result of each candidate beam, and selects the second beam from the at least one candidate beam based on the measurement result of each candidate beam.

It may be understood that for specific descriptions of step S506, refer to step S306. To avoid repetition, details are not described herein again.

S507: The second terminal device sends an index of the second beam to the first terminal device.

It may be understood that for specific descriptions of step S507, refer to step S307. To avoid repetition, details are not described herein again.

S508: When determining that the first beam fails, the first terminal device sends a second signal to the second terminal device on the second beam.

It may be understood that for specific descriptions of step S508, refer to step S308. To avoid repetition, details are not described herein again.

In this embodiment of this application, the second terminal device may determine, after the first beam fails, to select the second beam, so that the first terminal device can restore a communication link to the second terminal device by using the second beam when the first beam fails. This embodiment of this application can implement sidelink beam failure recovery to improve communication reliability.

The foregoing describes the method embodiments provided in embodiments of this application. The following describes apparatus embodiments in embodiments of this application.

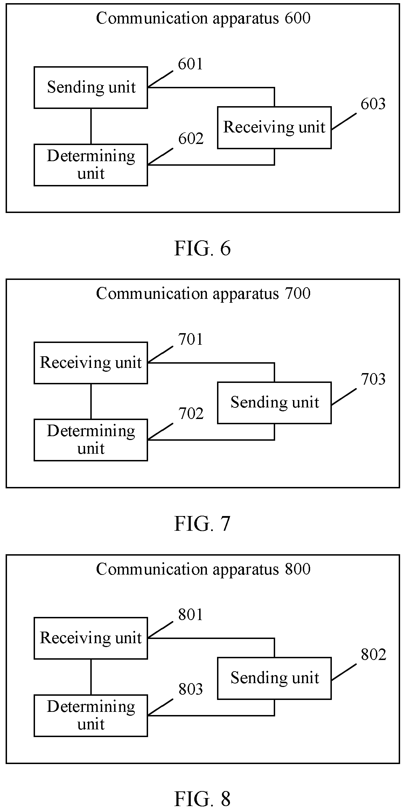

FIG. 6 is a diagram of a structure of a communication apparatus according to an embodiment of this application. The communication apparatus may be a first terminal device or an apparatus (for example, a chip, a chip system, or a circuit) in a first terminal device. As shown in FIG. 6, the communication apparatus 600 includes at least a sending unit 601, a determining unit 602, and a receiving unit 603.

The sending unit 601 is configured to send N first signals to a second terminal device on a first beam, where N is a positive integer greater than or equal to 1.

The determining unit 602 is configured to determine, based on M measurement results and threshold information, to select a second beam, where the M measurement results are measurement results corresponding to the first beam, the second beam is a beam in at least one candidate beam, and 1 ≤ M ≤ N.

When it is determined that the first beam fails, the sending unit 601 is further configured to send a second signal to the second terminal device on the second beam.

In an embodiment, when determining that the first beam fails, the determining unit 602 is specifically configured to:
when a type of the M measurement results is the first type, and a quantity of measurement results less than or equal to a first threshold in the M measurement results is greater than or equal to a first threshold value, determine that the first beam fails; or
when a type of the M measurement results is a second type, and a quantity of measurement results greater than or equal to a second threshold in the M measurement results is greater than or equal to a first threshold value, determine that the first beam fails.

In an embodiment, when determining, based on the M measurement results and the threshold information, to select the second beam, the determining unit 602 is specifically configured to:
determine, based on the M measurement results, the threshold information, and the first threshold value, to select the second beam.

In an embodiment, when determining, based on the M measurement results, the threshold information, and the first threshold value, to select the second beam, the determining unit 602 is specifically configured to:
determine, based on L comparison results and the first threshold value, to select the second beam, where the L comparison results are results obtained by comparing the M measurement results with the threshold information, and 1 ≤ L ≤ M.

In an embodiment, the first threshold is a threshold corresponding to the first type, and a threshold corresponding to the threshold information is greater than the first threshold; and the second threshold is a threshold corresponding to the second type, and the threshold corresponding to the threshold information is less than the second threshold.

In an embodiment, when determining, based on the L comparison results and the first threshold value, to select the second beam, the determining unit 602 is specifically configured to:
when the type of the M measurement results is the first type, and the quantity of measurement results less than or equal to the threshold information in the M measurement results is greater than or equal to the first threshold value, determine to select the second beam; or
when the type of the M measurement results is the second type, and the quantity of measurement results greater than or equal to the threshold information in the M measurement results is greater than or equal to the first threshold value, determine to select the second beam.

In an embodiment, when determining, based on the M measurement results, the threshold information, and the first threshold value, to select the second beam, the determining unit 602 is specifically configured to:
determine, based on L comparison results and a second threshold value, to select the second beam, where the L comparison results are results obtained by comparing the M measurement results with the threshold information, the second threshold value is less than the first threshold value, and 1 ≤ L ≤ M.

In an embodiment, when determining, based on the L comparison results and the second threshold value, to select the second beam, the determining unit 602 is specifically configured to:
when the threshold corresponding to the threshold information is equal to the first threshold, and the quantity of measurement results less than or equal to the first threshold in the M measurement results is greater than or equal to the second threshold value, determine to select the second beam; or
when the threshold corresponding to the threshold information is equal to the second threshold, and the quantity of measurement results greater than or equal to the second threshold in the M measurement results is greater than or equal to the second threshold value, determine to select the second beam.

In an embodiment, the communication apparatus further includes:
a receiving unit 603, configured to receive the M measurement results from the second terminal device.

In an embodiment, when determining to select the second beam, the determining unit 602 is specifically configured to:
send a third signal to the second terminal device on the at least one candidate beam, where the third signal is used to determine a measurement result of the at least one candidate beam.

In an embodiment, the receiving unit 603 is further configured to:
receive an index of the second beam from the second terminal device, where the second beam is a beam with an optimal measurement result in the at least one candidate beam.

In an embodiment, the first type corresponds to an RSRP, RSRQ, or an SINR; and the second type corresponds to a BLER.

In an embodiment, the sending unit 601 is further configured to:
send at least one of configuration information of the first signal, configuration information of the second signal, configuration information of the third signal, the first threshold, the second threshold, the first threshold value, the second threshold value, and the threshold information to the second terminal device.

For more detailed descriptions of the sending unit 601, the determining unit 602, and the receiving unit 603, directly refer to the related descriptions of the first terminal device in the method embodiments shown in FIG. 2 to FIG. 5. Details are not described herein again.

FIG. 7 is a diagram of a structure of another communication apparatus according to an embodiment of this application. The communication apparatus may be a second terminal device or an apparatus (for example, a chip, a chip system, or a circuit) in a second terminal device. As shown in FIG. 7, the communication apparatus 700 includes at least a receiving unit 701, a determining unit 702, and a sending unit 703.

The receiving unit 701 is configured to receive N first signals from a first terminal device on a first beam, where N is a positive integer greater than or equal to 1.

The determining unit 702 is configured to determine, based on M measurement results and threshold information, to select a second beam, where the M measurement results are measurement results corresponding to the first beam, the second beam is a beam in at least one candidate beam, and 1 < M < N.

The receiving unit 701 is further configured to receive a second signal from the first terminal device on the second beam.

In an embodiment, when determining, based on the M measurement results and the threshold information, to select the second beam, the determining unit 702 is specifically configured to:
determine, based on the M measurement results, the threshold information, and a first threshold value, to select the second beam.

In an embodiment, when determining, based on the M measurement results, the threshold information, and the first threshold value, to select the second beam, the determining unit 702 is specifically configured to:
determine, based on L comparison results and the first threshold value, to select the second beam, where the L comparison results are results obtained by comparing the M measurement results with the threshold information, and 1 ≤ L ≤ M.

In an embodiment, a first threshold is a threshold corresponding to a first type, and a threshold corresponding to the threshold information is greater than the first threshold; and a second threshold is a threshold corresponding to a second type, and the threshold corresponding to the threshold information is less than the second threshold.

In an embodiment, when determining, based on the L comparison results and the first threshold value, to select the second beam, the determining unit 702 is specifically configured to:
when a type of the M measurement results is the first type, and a quantity of measurement results less than or equal to the threshold information in the M measurement results is greater than or equal to the first threshold value, determine to select the second beam; or
when a type of the M measurement results is the second type, and a quantity of measurement results greater than or equal to the threshold information in the M measurement results is greater than or equal to the first threshold value, determine to select the second beam.

In an embodiment, when determining, based on the M measurement results, the threshold information, and the first threshold value, to select the second beam, the determining unit 702 is specifically configured to:
determine, based on L comparison results and a second threshold value, to select the second beam, where the L comparison results are results obtained by comparing the M measurement results with the threshold information, the second threshold value is less than the first threshold value, and 1 ≤ L ≤ M.

In an embodiment, when determining, based on the L comparison results and the second threshold value, to select the second beam, the determining unit 702 is specifically configured to:
when the threshold corresponding to the threshold information is equal to the first threshold, and the quantity of measurement results less than or equal to the first threshold in the M measurement results is greater than or equal to the second threshold value, determine to select the second beam; or
when the threshold corresponding to the threshold information is equal to the first threshold, and the quantity of measurement results greater than or equal to the second threshold in the M measurement results is greater than or equal to the second threshold value, determine to select the second beam.

In an embodiment, when selecting the second beam, the determining unit 702 is specifically configured to:
send request information to the first terminal device, where the request information is used to request the first terminal device to send a third signal on the at least one candidate beam;
receive the third signal from the first terminal device on the at least one candidate beam;
determine a measurement result of the at least one candidate beam based on the third signal; and
send an index of the second beam to the first terminal device, where the second beam is a beam with an optimal measurement result in the at least one candidate beam.

In an embodiment, the determining unit 702 is further configured to determine that the first beam fails.

The communication apparatus further includes:
a sending unit 703, configured to: when it is determined that the first beam fails, send beam failure indication information to the first terminal device, where the beam failure indication information is used to trigger the first terminal device to send the second signal on the second beam.

In an embodiment, when determining that the first beam fails, the determining unit 702 is specifically configured to:
when the type of the M measurement results is the first type, and the quantity of measurement results less than or equal to the first threshold in the M measurement results is greater than or equal to the first threshold value, determine that the first beam fails; or
when the type of the M measurement results is the second type, and the quantity of measurement results greater than or equal to the second threshold in the M measurement results is greater than or equal to the first threshold value, determine that the first beam fails.

In an embodiment, the first type corresponds to an RSRP, RSRQ, or an SINR; and the second type corresponds to a BLER.

In an embodiment, the receiving unit 701 is further configured to receive at least one of configuration information of the first signal, configuration information of the second signal, configuration information of the third signal, and the threshold information from the first terminal device.

For more detailed descriptions of the receiving unit 701, the determining unit 702, and the sending unit 703, directly refer to the related descriptions of the second terminal device in the method embodiments shown in FIG. 2 to FIG. 5. Details are not described herein again.

FIG. 8 is a diagram of a structure of still another communication apparatus according to an embodiment of this application. The communication apparatus may be a second terminal device or an apparatus (for example, a chip, a chip system, or a circuit) in a second terminal device. As shown in FIG. 8, the communication apparatus 800 includes at least a receiving unit 801, a sending unit 802, and a determining unit 803.

The receiving unit 801 is configured to receive N first signals from a first terminal device on a first beam, where N is a positive integer greater than or equal to 1.

The sending unit 802 is configured to send M measurement results to the first terminal device, where 1 ≤ M ≤ N.

The receiving unit 801 is further configured to receive a second signal from the first terminal device on a second beam, where the second beam is a beam in at least one candidate beam, the second beam is determined based on the M measurement results and threshold information, and the M measurement results are measurement results corresponding to the first beam.

In an embodiment, the receiving unit 801 is further configured to:
receive a third signal from the first terminal device on the at least one candidate beam.

The communication apparatus further includes:
a determining unit 803, configured to determine a measurement result of the at least one candidate beam based on the third signal.

The sending unit 802 is further configured to send an index of the second beam to the first terminal device, where the second beam is a beam with an optimal measurement result in the at least one candidate beam.

In an embodiment, the receiving unit 801 is further configured to receive at least one of configuration information of the first signal, configuration information of the second signal, configuration information of the third signal, a first threshold, a second threshold, a first threshold value, a second threshold value, and the threshold information from the first terminal device.

For more detailed descriptions of the receiving unit 801, the sending unit 802, and the determining unit 803, directly refer to the related descriptions of the second terminal device in the method embodiments shown in FIG. 2 to FIG. 5. Details are not described herein again.

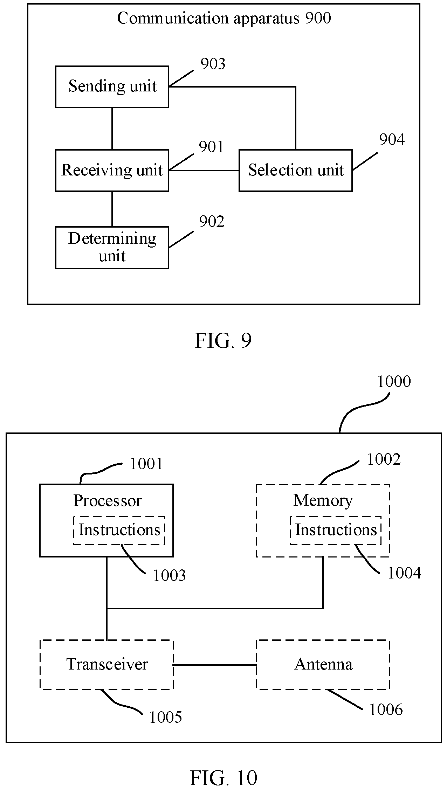

FIG. 9 is a diagram of a structure of still another communication apparatus according to an embodiment of this application. The communication apparatus may be a second terminal device or an apparatus (for example, a chip, a chip system, or a circuit) in a second terminal device. As shown in FIG. 9, the communication apparatus 900 includes at least a receiving unit 901, a determining unit 902, a sending unit 903, and a selection unit 904.

The receiving unit 901 is configured to receive N first signals from a first terminal device on a first beam, where N is a positive integer greater than or equal to 1.

The determining unit 902 is configured to determine, based on M measurement results, a threshold, and a first threshold value, that the first beam fails, where the M measurement results are measurement results corresponding to the first beam, and 1 ≤ M ≤ N.

The sending unit 903 is configured to: when it is determined that the first beam fails, repeatedly send, by a second terminal device, request information to a first terminal device in a plurality of different directions, where the request information is used to request the first terminal device to send a third signal on at least one candidate beam.

The receiving unit 901 is further configured to receive the third signal from the first terminal device on the at least one candidate beam.

The selection unit 904 is configured to select a second beam based on a measurement result of the at least one candidate beam.

The receiving unit 901 is further configured to receive a second signal from the first terminal device on the second beam, where the second beam is a beam in the at least one candidate beam.

In an embodiment, when determining, based on the M measurement results and a first threshold, that the first beam fails, the determining unit 902 is specifically configured to:
when a type of the M measurement results is a first type, and a quantity of measurement results less than or equal to the first threshold in the M measurement results is greater than or equal to the first threshold value, determine that the first beam fails, where the first threshold is a threshold corresponding to the first type; or
when a type of the M measurement results is a second type, and a quantity of measurement results greater than or equal to a second threshold in the M measurement results is greater than or equal to a first threshold value, determine that the first beam fails, where the second threshold is a threshold corresponding to the second type.

In an embodiment, when selecting the second beam based on the measurement result of the at least one candidate beam, the selection unit 904 is specifically configured to:
select a beam with an optimal measurement result in the at least one candidate beam as the second beam.

The sending unit 903 is further configured to send an index of the second beam to the first terminal device.

In an embodiment, the first type corresponds to an RSRP, RSRQ, or an SINR; and the second type corresponds to a BLER.

In an embodiment, the receiving unit 901 is further configured to receive at least one of configuration information of the first signal, configuration information of the second signal, configuration information of the third signal, the first threshold, the second threshold, and the first threshold value from the first terminal device.

For more detailed descriptions of the receiving unit 901, the determining unit 902, the sending unit 903, and the selection unit 904, directly refer to the related descriptions of the second terminal device in the method embodiments shown in FIG. 2 to FIG. 5. Details are not described herein again.

Based on the foregoing network architecture, FIG. 10 is a diagram of a structure of still another communication apparatus according to an embodiment of this application. As shown in FIG. 10, the apparatus 1000 may include one or more processors 1001. The processor 1001 may also be referred to as a processing unit, and may implement a control function. The processor 1001 may be a general-purpose processor, a dedicated processor, or the like, for example, may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1001 may alternatively store instructions and/or data 1003, and the instructions and/or data 1003 may be run by the processor, so that the apparatus 1000 performs the methods described in the foregoing method embodiments.

In another optional design, the processor 1001 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1000 may include a circuit. The circuit may implement a sending, receiving, or communication function in the foregoing method embodiments.

Optionally, the apparatus 1000 may include one or more memories 1002. The memory 1002 may store instructions 1004. The instructions may be run on the processor, so that the apparatus 1000 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1000 may further include a transceiver 1005 and/or an antenna 1006. The processor 1001 may be referred to as a processing unit, and controls the apparatus 1000. The transceiver 1005 may be referred to as a transceiver unit, a transceiver machine, a transceiver circuit, a transceiver apparatus, a transceiver module, or the like, and is configured to implement a transceiver function.

Optionally, the apparatus 1000 in this embodiment of this application may be configured to perform the methods described in FIG. 2 to FIG. 5 in embodiments of this application.

In an embodiment, the communication apparatus 1000 may be a first terminal device or an apparatus (for example, a chip, a chip system, or a circuit) in a first terminal device. When computer program instructions stored in the memory 1002 are executed, the processor 1001 is configured to control the determining unit 602 to perform the operations performed in the foregoing embodiment. The transceiver 1005 is configured to perform the operations performed by the sending unit 601 and the receiving unit 603 in the foregoing embodiment. The transceiver 1005 is further configured to send information to another communication apparatus other than the communication apparatus. The first terminal device or the apparatus in the first terminal device may further be configured to perform various methods performed by the first terminal device in the method embodiments in FIG. 2 to FIG. 5. Details are not described herein again.

In an embodiment, the communication apparatus 1000 may be a second terminal device or an apparatus (for example, a chip, a chip system, or a circuit) in a second terminal device. When the computer program instructions stored in the memory 1002 are executed, the processor 1001 is configured to control the determining unit 702 to perform the operations performed in the foregoing embodiment. The transceiver 1005 is configured to receive information from another communication apparatus other than the communication apparatus. The transceiver 1005 is further configured to perform the operations performed by the receiving unit 701 and the sending unit 703 in the foregoing embodiment. The second terminal device or the apparatus in the second terminal device may further be configured to perform various methods performed by the second terminal device in the method embodiments in FIG. 2 to FIG. 5. Details are not described herein again.

In an embodiment, the communication apparatus 1000 may be a second terminal device or an apparatus (for example, a chip, a chip system, or a circuit) in a second terminal device. When the computer program instructions stored in the memory 1002 are executed, the processor 1001 is configured to control the determining unit 803 to perform the operations performed in the foregoing embodiment. The transceiver 1005 is configured to receive information from another communication apparatus other than the communication apparatus. The transceiver 1005 is further configured to perform the operations performed by the receiving unit 801 and the sending unit 802 in the foregoing embodiment. The second terminal device or the apparatus in the second terminal device may further be configured to perform various methods performed by the second terminal device in the method embodiments in FIG. 2 to FIG. 5. Details are not described herein again.

In an embodiment, the communication apparatus 1000 may be a second terminal device or an apparatus (for example, a chip, a chip system, or a circuit) in a second terminal device. When the computer program instructions stored in the memory 1002 are executed, the processor 1001 is configured to control the determining unit 902 and the selection unit 904 to perform the operations performed in the foregoing embodiment. The transceiver 1005 is configured to receive information from another communication apparatus other than the communication apparatus. The transceiver 1005 is further configured to perform the operations performed by the receiving unit 901 and the sending unit 903 in the foregoing embodiment. The second terminal device or the apparatus in the second terminal device may further be configured to perform various methods performed by the second terminal device in the method embodiments in FIG. 2 to FIG. 5. Details are not described herein again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may be manufactured by using various IC technologies, such as a complementary metal oxide semiconductor (complementary metal oxide semiconductor, CMOS), an N-type metal oxide semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first terminal device or a second terminal device. However, a scope of the apparatus described in this application is not limited thereto, and a structure of the apparatus may not be limited by that in FIG. 10. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

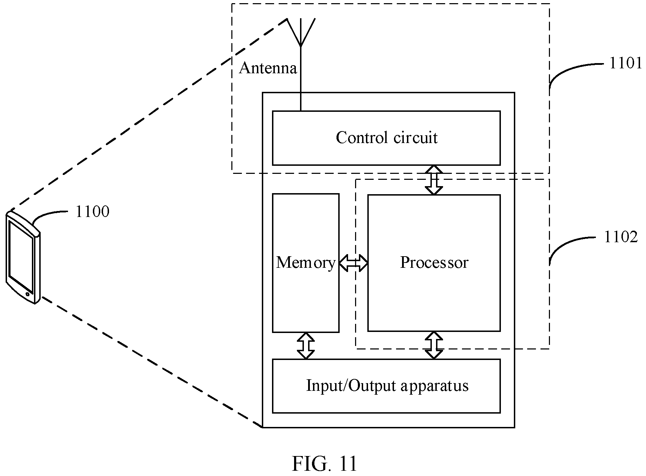

FIG. 11 is a diagram of a structure of a terminal device according to an embodiment of this application. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to outside in an electromagnetic wave form through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 11 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to: control the entire terminal, execute a software program, and process data of the software program. The processor in FIG. 11 is integrated with functions of the baseband processor and the central processing unit. Persons skilled in the art may understand that the baseband processor and the central processing unit may alternatively be processors independent of each other, and are interconnected by using a technology such as a bus. Persons skilled in the art may understand that the terminal may include a plurality of baseband processors to adapt to different network standards, and the terminal may include a plurality of central processing units to enhance a processing capability of the terminal. All components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1101 of the terminal device 1100, and the processor that has a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component configured to implement a receiving function in the transceiver unit 1101 may be considered as a receiving unit, and a component configured to implement a sending function in the transceiver unit 1101 may be considered as a sending unit. In other words, the transceiver unit 1101 includes a receiving unit and a sending unit. For example, the receiving unit may also be referred to as a receiver, a receive machine, a receiving circuit, or the like; and the sending unit may also be referred to as a transmitter, a transmit machine, a transmitting circuit, or the like. Optionally, the receiving unit and the sending unit may be one integrated unit, or may be a plurality of independent units. The receiving unit and the sending unit may be in one geographical location, or may be distributed in a plurality of geographical locations.

In an embodiment, the processing unit 1102 is configured to perform the operations performed by the determining unit 602 in the foregoing embodiment, and the transceiver unit 1101 is configured to perform the operations performed by the sending unit 601 and the receiving unit 603 in the foregoing embodiment. The terminal device 1100 may further be configured to perform various methods performed by the first terminal device in the method embodiments in FIG. 2 to FIG. 5. Details are not described herein again.

In an embodiment, the processing unit 1102 is configured to perform the operations performed by the determining unit 702 in the foregoing embodiment, and the transceiver unit 1101 is configured to perform the operations performed by the receiving unit 701 and the sending unit 703 in the foregoing embodiment. The terminal device 1100 may further be configured to perform various methods performed by the second terminal device in the method embodiments in FIG. 2 to FIG. 5. Details are not described herein again.

In an embodiment, the processing unit 1102 is configured to perform the operations performed by the determining unit 803 in the foregoing embodiment, and the transceiver unit 1101 is configured to perform the operations performed by the receiving unit 801 and the sending unit 802 in the foregoing embodiment. The terminal device 1100 may further be configured to perform various methods performed by the second terminal device in the method embodiments in FIG. 2 to FIG. 5. Details are not described herein again.

In an embodiment, the processing unit 1102 is configured to perform the operations performed by the determining unit 902 and the selection unit 904 in the foregoing embodiment, and the transceiver unit 1101 is configured to perform the operations performed by the receiving unit 901 and the sending unit 903 in the foregoing embodiment. The terminal device 1100 may further be configured to perform various methods performed by the second terminal device in the method embodiments in FIG. 2 to FIG. 5. Details are not described herein again.

An embodiment of this application further provides a computer-readable storage medium. The computer-readable storage medium stores a computer program. When the program is executed by a processor, a procedure related to the terminal in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface is interconnected to the at least one processor by using a line. The at least one processor is configured to run a computer program or instructions to perform some or all steps including any one of the methods recorded in the method embodiments corresponding to FIG. 2 to FIG. 5. The chip system may include a chip, or may include a chip and another discrete component.

An embodiment of this application further discloses a communication system. The system includes a first terminal device and a second terminal device. For specific descriptions, refer to the communication methods shown in FIG. 2 to FIG. 5. Optionally, the system includes the first terminal device, the second terminal device, a first network device, and a second network device. For specific descriptions, refer to the communication methods shown in FIG. 2 to FIG. 5.

It should be understood that the memory in embodiments of this application may be a volatile memory or a nonvolatile memory, or may include both a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static rAM, SRAM), a dynamic random access memory (dynamic RAM, DRAM), a synchronous dynamic random access memory (synchronous dRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that the units and algorithm steps of each example described with reference to embodiments provided in this specification can be implemented in electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

Persons skilled in the art can clearly understand that for convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separated, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

A sequence of the steps of the method in embodiments of this application may be adjusted, combined, or removed based on an actual requirement.

The modules/units in the apparatus in embodiments of this application may be combined, divided, and deleted based on an actual requirement.

As described above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
sending N first signals to a second terminal device on a first beam, wherein N is a positive integer greater than or equal to 1;
determining, based on M measurement results and threshold information, to select a second beam, wherein the M measurement results are measurement results corresponding to the first beam, the second beam is a beam in at least one candidate beam, and 1 ≤ M ≤ N; and
when determining that the first beam fails, sending a second signal to the second terminal device on the second beam.

2. The method according to claim 1, wherein the determining that the first beam fails comprises:
when a type of the M measurement results is a first type, and a quantity of measurement results less than or equal to a first threshold in the M measurement results is greater than or equal to a first threshold value, determining that the first beam fails; or
when a type of the M measurement results is a second type, and a quantity of measurement results greater than or equal to a second threshold in the M measurement results is greater than or equal to a first threshold value, determining that the first beam fails.

3. The method according to claim 2, wherein the determining, based on M measurement results and threshold information, to select a second beam comprises:
determining, based on the M measurement results, the threshold information, and the first threshold value, to select the second beam.

4. The method according to claim 3, wherein the determining, based on the M measurement results, the threshold information, and the first threshold value, to select the second beam comprises:
determining, based on L comparison results and the first threshold value, to select the second beam, wherein the L comparison results are results obtained by comparing the M measurement results with the threshold information, and 1 ≤ L ≤ M.

5. The method according to claim 4, wherein
the first threshold is a threshold corresponding to the first type, and a threshold corresponding to the threshold information is greater than the first threshold; and
the second threshold is a threshold corresponding to the second type, and the threshold corresponding to the threshold information is less than the second threshold.

6. The method according to claim 5, wherein the determining, based on L comparison results and the first threshold value, to select the second beam comprises:
when the type of the M measurement results is the first type, and a quantity of measurement results less than or equal to the threshold information in the M measurement results is greater than or equal to the first threshold value, determining to select the second beam; or
when the type of the M measurement results is the second type, and a quantity of measurement results greater than or equal to the threshold information in the M measurement results is greater than or equal to the first threshold value, determining to select the second beam.

7. The method according to claim 3, wherein the determining, based on the M measurement results, the threshold information, and the first threshold value, to select the second beam comprises:
determining, based on L comparison results and a second threshold value, to select the second beam, wherein the L comparison results are results obtained by comparing the M measurement results with the threshold information, the second threshold value is less than the first threshold value, and 1 ≤ L ≤ M.

8. The method according to claim 7, wherein the determining, based on L comparison results and a second threshold value, to select the second beam comprises:
when a threshold corresponding to the threshold information is equal to the first threshold, and the quantity of measurement results less than or equal to the first threshold in the M measurement results is greater than or equal to the second threshold value, determining to select the second beam; or
when a threshold corresponding to the threshold information is equal to the second threshold, and the quantity of measurement results greater than or equal to the second threshold in the M measurement results is greater than or equal to the second threshold value, determining to select the second beam.

9. The method according to any one of claims 1 to 8, further comprising:
receiving the M measurement results from the second terminal device.

10. The method according to any one of claims 1 to 9, wherein the determining to select a second beam comprises:
sending a third signal to the second terminal device on the at least one candidate beam, wherein the third signal is used to determine a measurement result of the at least one candidate beam; and
the method further comprises:
receiving an index of the second beam from the second terminal device, wherein the second beam is a beam with an optimal measurement result in the at least one candidate beam.

11. The method according to claim 2, 4, or 6, wherein the first type corresponds to a reference signal received power RSRP, reference signal received quality RSRQ, or a signal to interference plus noise ratio SINR, and the second type corresponds to a block error rate BLER.

12. The method according to any one of claims 1 to 11, further comprising:
sending at least one of configuration information of the first signal, configuration information of the second signal, configuration information of the third signal, the first threshold, the second threshold, the first threshold value, the second threshold value, and the threshold information to the second terminal device.

13. A communication method, comprising:
receiving N first signals from a first terminal device on a first beam, wherein N is a positive integer greater than or equal to 1;
determining, based on M measurement results and threshold information, to select a second beam, wherein the M measurement results are measurement results corresponding to the first beam, the second beam is a beam in at least one candidate beam, and 1 ≤ M ≤ N; and
receiving a second signal from the first terminal device on the second beam.

14. The method according to claim 13, wherein the determining, based on M measurement results and threshold information, to select a second beam comprises:
determining, based on the M measurement results, the threshold information, and a first threshold value, to select the second beam.

15. The method according to claim 14, wherein the determining, based on the M measurement results, the threshold information, and a first threshold value, to select the second beam comprises:
determining, based on L comparison results and the first threshold value, to select the second beam, wherein the L comparison results are results obtained by comparing the M measurement results with the threshold information, and 1 ≤ L ≤ M.

16. The method according to claim 15, wherein
a first threshold is a threshold corresponding to a first type, and a threshold corresponding to the threshold information is greater than the first threshold; and
a second threshold is a threshold corresponding to a second type, and the threshold corresponding to the threshold information is less than the second threshold.

17. The method according to claim 16, wherein the determining, based on L comparison results and the first threshold value, to select the second beam comprises:
when a type of the M measurement results is the first type, and a quantity of measurement results less than or equal to the threshold information in the M measurement results is greater than or equal to the first threshold value, determining to select the second beam; or
when a type of the M measurement results is the second type, and a quantity of measurement results greater than or equal to the threshold information in the M measurement results is greater than or equal to the first threshold value, determining to select the second beam.

18. The method according to claim 14, wherein the determining, based on the M measurement results, the threshold information, and a first threshold value, to select the second beam comprises:
determining, based on L comparison results and a second threshold value, to select the second beam, wherein the L comparison results are results obtained by comparing the M measurement results with the threshold information, the second threshold value is less than the first threshold value, and 1 ≤ L ≤ M.

19. The method according to claim 18, wherein the determining, based on L comparison results and a second threshold value, to select the second beam comprises:
when a threshold corresponding to the threshold information is equal to a first threshold, and a quantity of measurement results less than or equal to the first threshold in the M measurement results is greater than or equal to the second threshold value, determining to select the second beam; or
when a threshold corresponding to the threshold information is equal to a second threshold, and a quantity of measurement results greater than or equal to the second threshold in the M measurement results is greater than or equal to the second threshold value, determining to select the second beam.

20. The method according to any one of claims 13 to 19, wherein the selecting a second beam comprises:
sending request information to the first terminal device, wherein the request information is used to request the first terminal device to send a third signal on the at least one candidate beam;
receiving the third signal from the first terminal device on the at least one candidate beam;
determining a measurement result of the at least one candidate beam based on the third signal; and
sending an index of the second beam to the first terminal device, wherein the second beam is a beam with an optimal measurement result in the at least one candidate beam.

21. The method according to any one of claims 13 to 20, further comprising:
when determining that the first beam fails, sending beam failure indication information to the first terminal device, wherein the beam failure indication information is used to trigger the first terminal device to send the second signal on the second beam.

22. The method according to claim 21, wherein the determining that the first beam fails comprises:
when the type of the M measurement results is the first type, and the quantity of measurement results less than or equal to the first threshold in the M measurement results is greater than or equal to the first threshold value, determining that the first beam fails; or
when the type of the M measurement results is the second type, and the quantity of measurement results greater than or equal to the second threshold in the M measurement results is greater than or equal to the first threshold value, determining that the first beam fails.

23. The method according to claim 16 or 17, wherein the first type corresponds to a reference signal received power RSRP, reference signal received quality RSRQ, or a signal to interference plus noise ratio SINR, and the second type corresponds to a block error rate BLER.

24. A communication apparatus, comprising:
a sending unit, configured to send N first signals to a second terminal device on a first beam, wherein N is a positive integer greater than or equal to 1; and
a determining unit, configured to determine, based on M measurement results and threshold information, to select a second beam, wherein the M measurement results are measurement results corresponding to the first beam, the second beam is a beam in at least one candidate beam, and 1 ≤ M ≤ N, wherein
when it is determined that the first beam fails, the sending unit is further configured to send a second signal to the second terminal device on the second beam.

25. The apparatus according to claim 24, wherein when determining that the first beam fails, the determining unit is specifically configured to:
when a type of the M measurement results is a first type, and a quantity of measurement results less than or equal to a first threshold in the M measurement results is greater than or equal to a first threshold value, determine, by the first terminal device, that the first beam fails; or
when a type of the M measurement results is a second type, and a quantity of measurement results greater than or equal to a second threshold in the M measurement results is greater than or equal to a first threshold value, determine, by the first terminal device, that the first beam fails.

26. The apparatus according to claim 25, wherein when determining, based on the M measurement results and the threshold information, to select the second beam, the determining unit is specifically configured to:
determine, based on the M measurement results, the threshold information, and the first threshold value, to select the second beam.

27. The apparatus according to claim 26, wherein when determining, based on the M measurement results, the threshold information, and the first threshold value, to select the second beam, the determining unit is specifically configured to:
determine, based on L comparison results and the first threshold value, to select the second beam, wherein the L comparison results are results obtained by comparing the M measurement results with the threshold information, and 1 ≤ L ≤ M.

28. The apparatus according to claim 27, wherein the first threshold is a threshold corresponding to the first type, and a threshold corresponding to the threshold information is greater than the first threshold; and
the second threshold is a threshold corresponding to the second type, and the threshold corresponding to the threshold information is less than the second threshold.

29. The apparatus according to claim 28, wherein when determining, based on the L comparison results and the first threshold value, to select the second beam, the determining unit is specifically configured to:
when the type of the M measurement results is the first type, and a quantity of measurement results less than or equal to the threshold information in the M measurement results is greater than or equal to the first threshold value, determine, by the first terminal device, to select the second beam; or
when the type of the M measurement results is the second type, and a quantity of measurement results greater than or equal to the threshold information in the M measurement results is greater than or equal to the first threshold value, determine, by the first terminal device, to select the second beam.

30. The apparatus according to claim 26, wherein when determining, based on the M measurement results, the threshold information, and the first threshold value, to select the second beam, the determining unit is specifically configured to:
determine, by the first terminal device based on L comparison results and a second threshold value, to select the second beam, wherein the L comparison results are results obtained by comparing the M measurement results with the threshold information, the second threshold value is less than the first threshold value, and 1 ≤ L ≤ M.

31. The apparatus according to claim 30, wherein when determining, based on the L comparison results and the second threshold value, to select the second beam, the determining unit is specifically configured to:
when a threshold corresponding to the threshold information is equal to the first threshold, and the quantity of measurement results less than or equal to the first threshold in the M measurement results is greater than or equal to the second threshold value, determine, by the first terminal device, to select the second beam; or
when a threshold corresponding to the threshold information is equal to the second threshold, and the quantity of measurement results greater than or equal to the second threshold in the M measurement results is greater than or equal to the second threshold value, determine, by the first terminal device, to select the second beam.

32. The apparatus according to any one of claims 24 to 31, further comprising:
a receiving unit, configured to receive the M measurement results from the second terminal device.

33. The apparatus according to any one of claims 24 to 32, wherein when determining to select the second beam, the determining unit is specifically configured to:
send a third signal to the second terminal device on the at least one candidate beam, wherein the third signal is used to determine a measurement result of the at least one candidate beam; and
the receiving unit is further configured to receive an index of the second beam from the second terminal device, wherein the second beam is a beam with an optimal measurement result in the at least one candidate beam.

34. The apparatus according to claim 25, 27, or 29, wherein the first type corresponds to a reference signal received power RSRP, reference signal received quality RSRQ, or a signal to interference plus noise ratio SINR, and the second type corresponds to a block error rate BLER.

35. The apparatus according to any one of claims 24 to 34, wherein the sending unit is further configured to send at least one of configuration information of the first signal, configuration information of the second signal, configuration information of the third signal, the first threshold, the second threshold, the first threshold value, the second threshold value, and the threshold information to the second terminal device.

36. A communication apparatus, comprising:
a receiving unit, configured to receive N first signals from a first terminal device on a first beam, wherein N is a positive integer greater than or equal to 1; and
a determining unit, configured to determine, based on M measurement results and threshold information, to select a second beam, wherein the M measurement results are measurement results corresponding to the first beam, the second beam is a beam in at least one candidate beam, and 1 ≤ M ≤ N, wherein
the receiving unit is further configured to receive a second signal from the first terminal device on the second beam.

37. The apparatus according to claim 36, wherein when determining, based on the M measurement results and the threshold information, to select the second beam, the determining unit is specifically configured to:
determine, based on the M measurement results, the threshold information, and a first threshold value, to select the second beam.

38. The apparatus according to claim 37, wherein when determining, based on the M measurement results, the threshold information, and first threshold value, to select the second beam, the determining unit is specifically configured to:
determine, based on L comparison results and the first threshold value, to select the second beam, wherein the L comparison results are results obtained by comparing the M measurement results with the threshold information, and 1 ≤ L ≤ M.

39. The apparatus according to claim 38, wherein a first threshold is a threshold corresponding to a first type, and a threshold corresponding to the threshold information is greater than the first threshold; and
a second threshold is a threshold corresponding to a second type, and the threshold corresponding to the threshold information is less than the second threshold.

40. The apparatus according to claim 39, wherein when determining, based on the L comparison results and the first threshold value, to select the second beam, the determining unit is specifically configured to:
when a type of the M measurement results is the first type, and a quantity of measurement results less than or equal to the threshold information in the M measurement results is greater than or equal to the first threshold value, determine, by the second terminal device, to select the second beam; or
when a type of the M measurement results is the second type, and a quantity of measurement results greater than or equal to the threshold information in the M measurement results is greater than or equal to the first threshold value, determine, by the second terminal device, to select the second beam.

41. The apparatus according to claim 37, wherein when determining, based on the M measurement results, the threshold information, and first threshold value, to select the second beam, the determining unit is specifically configured to:
determine, based on L comparison results and a second threshold value, to select the second beam, wherein the L comparison results are results obtained by comparing the M measurement results with the threshold information, the second threshold value is less than the first threshold value, and 1 ≤ L ≤ M.

42. The apparatus according to claim 41, wherein when determining, based on the L comparison results and the second threshold value, to select the second beam, the determining unit is specifically configured to:
when a threshold corresponding to the threshold information is equal to a first threshold, and a quantity of measurement results less than or equal to the first threshold in the M measurement results is greater than or equal to the second threshold value, determine, by the second terminal device, to select the second beam; or
when a threshold corresponding to the threshold information is equal to a second threshold, and a quantity of measurement results greater than or equal to the second threshold in the M measurement results is greater than or equal to the second threshold value, determine, by the second terminal device, to select the second beam.

43. The apparatus according to any one of claims 36 to 42, wherein when selecting the second beam, the determining unit is specifically configured to:
send request information to the first terminal device, wherein the request information is used to request the first terminal device to send a third signal on the at least one candidate beam;
receive, by the second terminal device, the third signal from the first terminal device on the at least one candidate beam;
determine a measurement result of the at least one candidate beam based on the third signal; and
send, by the second terminal device, an index of the second beam to the first terminal device, wherein the second beam is a beam with an optimal measurement result in the at least one candidate beam.

44. The apparatus according to any one of claims 36 to 43, further comprising:
a sending unit, configured to: when it is determined that the first beam fails, send beam failure indication information to the first terminal device, wherein the beam failure indication information is used to trigger the first terminal device to send the second signal on the second beam.

45. The apparatus according to claim 44, wherein when determining that the first beam fails, the determining unit is specifically configured to:
when the type of the M measurement results is the first type, and the quantity of measurement results less than or equal to the first threshold in the M measurement results is greater than or equal to the first threshold value, determine, by the second terminal device, that the first beam fails; or
when the type of the M measurement results is the second type, and the quantity of measurement results greater than or equal to the second threshold in the M measurement results is greater than or equal to the first threshold value, determine, by the second terminal device, that the first beam fails.

46. The apparatus according to claim 39 or 40, wherein the first type corresponds to a reference signal received power RSRP, reference signal received quality RSRQ, or a signal to interference plus noise ratio SINR, and the second type corresponds to a block error rate BLER.

47. A communication apparatus, comprising a processor, a memory, an input interface, and an output interface, wherein the input interface is configured to receive information from another communication apparatus other than the communication apparatus, and the output interface is configured to output information to the another communication apparatus other than the communication apparatus; and when a computer program stored in the memory is invoked by the processor, the method according to any one of claims 1 to 12 or the method according to any one of claims 13 to 23 is implemented.

48. A computer-readable storage medium, wherein the computer-readable storage medium stores a computer program or computer instructions, and when the computer program or the computer instructions are executed by a processor, the method according to any one of claims 1 to 12 or the method according to any one of claims 13 to 23 is implemented.

49. A computer program product comprising program instructions, wherein when the program instructions are run on a computer, the computer is enabled to perform the method according to any one of claims 1 to 12 or the method according to any one of claims 13 to 23.

50. A chip system, comprising at least one processor, a memory, and an interface circuit, wherein the memory, the interface circuit, and the at least one processor are interconnected by using a line, and the at least one memory stores instructions; and when the instructions are executed by the processor, the method according to any one of claims 1 to 12 or the method according to any one of claims 13 to 23 is implemented.

51. A communication system, comprising a first terminal device and a second terminal device, wherein the first terminal device is configured to implement the method according to any one of claims 1 to 12, and the second terminal device is configured to implement the method according to any one of claims 13 to 23.
